# EUROPEAN PATENT APPLICATION

(11) **EP 3 576 061 A1**
(43) Date of publication of application: **04.12.2019**
(21) Application number: 19175657.6
(22) Date of filing: 21.05.2019
(51) Int. Cl.: G07G 1/00

(54) **ACCOUNTING APPARATUS AND METHOD THEREFOR**

(30) Priority: 25.05.2018 JP 2018100442
(71) Applicant: Toshiba Tec Kabushiki Kaisha, Shinagawa-ku Tokyo (JP)
(72) Inventor: Shiraishi, Takahiro, Tokyo, 141-8562 (JP); Noguchi, Kohji, Tokyo, 141-8562 (JP); Masuda, Takuro, Tokyo, 141-8562 (JP)
(74) Representative: Hoffmann Eitle

(57) **Abstract**

According to one embodiment, an accounting apparatus includes a reading unit, a receiving unit, a processing unit, and a forcing unit. The reading unit reads information of a purchased commodity. The receiving unit receives a payment of a price. The processing unit executes settlement based upon the information of the purchased commodity read by the reading unit and information of the payment of the price received by the receiving unit. The forcing unit forces the settlement when a number of items of the purchased commodities, whose information is read by the reading unit, reaches a regulated number of items.

## Description

### CROSS-REFERENCE TO RELATED APPLICATIONS

This application is based upon and claims the benefit of priority from Japanese Patent Application No. 2018-100442, filed in May 25, 2018, the entire contents of which are incorporated herein by reference.

### FIELD

Embodiments described herein relate generally to an accounting apparatus and a method therefor.

### BACKGROUND

In a shop with a layout that divides a sales place where commodities are displayed and an accounting place for performing accounting, a face-to-face accounting method, a self-accounting method, a semi-self accounting method, and the like are applied as an accounting method. In the face-to-face accounting method, a sales clerk performs registration of the sales commodities and accounting thereof. In the self-accounting method, a customer who is a purchaser performs the registration of the sales commodities and the accounting thereof by himself or herself. In the semi-self accounting method, the sales clerk performs the registration of the sales commodities and the customer performs the accounting thereof. However, no matter which accounting method is applied, it is inevitable that a customer queue waiting for the accounting can be formed during the peak time of congestion.

While some customers purchase many commodities at once, other customers purchase only a small number of items of one or two items . For example, at a convenience store or shops in various facilities, a ratio of customers who purchase only a small number of items is high. Therefore, an accounting method capable of finishing the accounting by himself or herself with little time spent is desirable to the customer who purchases only a small number of items.

### SUMMARY OF THE INVENTION

One of the objects of the present invention is to improve prior art techniques and overcome at least some of the prior art problems as for instance above illustrated.

According to a first aspect of the invention, it is provided an accounting apparatus, comprising: a reading unit configured to read information of a purchased commodity; a receiving unit configured to receive payment of a price; a processing unit configured to execute settlement based upon the information of the purchased commodity read by the reading unit and information of the payment of the price received by the receiving unit; and a forcing unit configured to force the settlement when a number of the purchased commodities, of which information is read by the reading unit, reaches a regulated number of purchased commodities.

Optionally, the apparatus according to the first aspect of the invention further comprises a blocking unit configured to block a purchaser who purchases the purchased commodity from passing through a passage through which the purchaser passes; and a control unit configured to cause the blocking unit to function until the settlement is started, and to cancel the function of the blocking unit when the settlement starts or the settlement is completed, wherein the reading unit and the receiving unit are arranged along the passage.

Optionally, the apparatus according to the first aspect of the invention further comprises a first blocking unit configured to block a purchaser who purchases the purchased commodity from entering a passage through which the purchaser passes; a second blocking unit configured to block the purchaser from exiting from the passage; and a control unit configured to cancel a function of the first blocking unit when the settlement is completed or when the settlement becomes impossible after causing the first blocking unit to function when the reading unit reads the information of the purchased commodity or the receiving unit receives the payment, and to cancel a function of the second blocking unit when the settlement starts or when the settlement is completed after causing the second blocking unit to function until the settlement starts, wherein the reading unit and the receiving unit are arranged along the passage.

Optionally, in the apparatus according to the first aspect of the invention the reading unit is provided on an entrance side of the passage; the receiving unit is provided on an exit side of the passage; and the forcing unit puts the reading unit into an operating state until a number of the purchased commodities whose information is read by the reading unit reaches a regulated number of purchased commodities, and forces the settlement by putting the reading unit into a non-operating state when the number of the purchased commodities reaches the regulated number of purchased commodities.

Optionally, in the apparatus according to the first aspect of the invention, the reading unit is provided on an exit side of the passage; the receiving unit is provided on an entrance side of the passage; and the forcing unit forces the settlement by putting the reading unit into a non-operating state when a number of the purchased commodities whose information is read by the reading unit reaches a regulated number of purchased commodities, after receiving information of the payment of the price received by the receiving unit.

Optionally, in the apparatus according to the first aspect of the invention, the reading unit is provided on an entrance side of the passage; the receiving unit is provided on an exit side of the passage; and the forcing unit puts the reading unit into an operating state until a number of the purchased commodities whose information is read by the reading unit reaches a regulated number of purchased commodities, and forces the settlement by putting the reading unit into a non-operating state when the number of the purchased commodities reaches the regulated number of purchased commodities.

Optionally, in the apparatus according to the first aspect of the invention, the reading unit is provided on an exit side of the passage; the receiving unit is provided on an entrance side of the passage; and the forcing unit forces the settlement by putting the reading unit into a non-operating state when a number of the purchased commodities whose information is read by the reading unit reaches a regulated number of purchased commodities, after receiving information of the payment of the price received by the receiving unit.

Optionally, the apparatus according the first aspect of the invention further comprises a setting unit configured to set the regulated number of purchased commodities.

According to a second aspect of the invention, it is provided an accounting apparatus, comprising: a reading unit configured to read information of a purchased commodity; a receiving unit configured to receive payment of a price; a processing unit configured to execute settlement based upon the information of the purchased commodity read by the reading unit and information of the payment of the price received by the receiving unit; and an invalidation unit configured to invalidate an operation of the reading unit when a number of the purchased commodities read by the reading unit reaches a regulated number of purchased commodities for limiting the number of the purchased commodities read by the reading unit.

Optionally, the apparatus according to the second aspect of the invention further comprises a setting unit configured to set the regulated number of purchased commodities.

Optionally, the apparatus according to the second aspect of the invention further comprises a blocking unit configured to block a purchaser who purchases the purchased commodity from passing through a passage through which the purchaser passes; and a control unit configured to cause the blocking unit to function until the settlement is started, and to cancel the function of the blocking unit when the settlement starts or the settlement is completed, wherein the reading unit and the receiving unit are arranged along the passage.

Optionally, the apparatus according to the second aspect of the invention further comprises a first blocking unit configured to block a purchaser who purchases the purchased commodity from entering a passage through which the purchaser passes; a second blocking unit configured to block the purchaser from exiting from the passage; and a control unit configured to cancel a function of the first blocking unit when the settlement is completed or when the settlement becomes impossible after causing the first blocking unit to function when the reading unit reads the information of the purchased commodity or the receiving unit receives the payment, and to cancel a function of the second blocking unit when the settlement starts or when the settlement is completed after causing the second blocking unit to function until the settlement starts, wherein the reading unit and the receiving unit are arranged along the passage.

Optionally, in the apparatus according to the second aspect of the invention, the reading unit is provided on an entrance side of the passage; the receiving unit is provided on an exit side of the passage; and the forcing unit puts the reading unit into an operating state until a number of the purchased commodities whose information is read by the reading unit reaches a regulated number of purchased commodities, and forces the settlement by putting the reading unit into a non-operating state when the number of the purchased commodities reaches the regulated number of purchased commodities.

Optionally, in the apparatus according to the second aspect of the invention, the reading unit is provided on an exit side of the passage; the receiving unit is provided on an entrance side of the passage; and the forcing unit forces the settlement by putting the reading unit into a non-operating state when a number of the purchased commodities whose information is read by the reading unit reaches a regulated number of purchased commodities, after receiving information of the payment of the price received by the receiving unit.

Optionally, in the apparatus according to the second aspect of the invention, the reading unit is provided on an entrance side of the passage; the receiving unit is provided on an exit side of the passage; and the forcing unit puts the reading unit into an operating state until a number of the purchased commodities whose information is read by the reading unit reaches a regulated number of purchased commodities, and forces the settlement by putting the reading unit into a non-operating state when the number of the purchased commodities reaches the regulated number of purchased commodities.

Optionally, in the apparatus according to the second aspect of the invention, the reading unit is provided on an exit side of the passage; the receiving unit is provided on an entrance side of the passage; and the forcing unit forces the settlement by putting the reading unit into a non-operating state when a number of the purchased commodities whose information is read by the reading unit reaches a regulated number of purchased commodities, after receiving information of the payment of the price received by the receiving unit.

According to a third aspect of the invention, it is provided a method for causing a computer of an accounting apparatus, including a reading unit that reads information of a purchased commodity and a receiving unit that receives a payment of a price, to perform functions of: executing settlement based upon information of the purchased commodity read by the reading unit and information of the payment of the price received by the receiving unit; and forcing settlement when a number of the purchased commodities whose information is read by the reading unit reaches a regulated number of purchased commodities.

Optionally, the method according to the third aspect of the invention further comprises setting the regulated number of purchased commodities.

Optionally, the method according to the third aspect of the invention further comprises blocking a purchaser who purchases the purchased commodity from passing through a passage through which the purchaser passes; and causing the blocking until the settlement is started, and canceling the blocking when the settlement starts or the settlement is completed.

Optionally, the method according to the third aspect of the invention further comprises first blocking a purchaser who purchases the purchased commodity from entering a passage through which the purchaser passes; second blocking the purchaser from exiting from the passage; and canceling the first blocking when the settlement is completed or when the settlement becomes impossible after causing the first blocking to function when reading the information of the purchased commodity or receiving the payment, and canceling the second blocking when the settlement starts or when the settlement is completed after the second blocking functions until the settlement starts.

### DESCRIPTION OF THE DRAWINGS

FIG. 1 is a block diagram illustrating a schematic configuration of a POS system constructed at a convenience store according to an embodiment;
FIG. 2 is a schematic diagram illustrating a layout example of the same convenience store;
FIG. 3 is a schematic diagram illustrating an appearance configuration of a through type POS terminal according to a first embodiment;
FIG. 4 is a block diagram illustrating a main circuit configuration of the same through type POS terminal;
FIG. 5 is a schematic diagram illustrating a main storage area included in the same through type POS terminal;
FIG. 6 is a flowchart illustrating a procedure of main information processing executed by a processor of the same through type POS terminal according to a main program;
FIG. 7 is a flowchart illustrating a procedure of the main information processing executed by the processor of the same through type POS terminal according to the main program;
FIG. 8 is a flowchart illustrating a procedure of the main information processing executed by the processor of the same through type POS terminal according to the main program;
FIG. 9 is a flowchart illustrating a procedure of the main information processing executed by the processor of the same through type POS terminal according to the main program;
FIG. 10 is a schematic diagram illustrating an appearance configuration of a through type POS terminal according to a second embodiment;
FIG. 11 is a flowchart illustrating a procedure of main information processing executed by a processor of the same through type POS terminal according to a main program;
FIG. 12 is a flowchart illustrating the procedure of the main information processing executed by the processor of the same through type POS terminal according to the main program;
FIG. 13 is a flowchart illustrating the procedure of the main information processing executed by the processor of the same through type POS terminal according to the main program;
FIG. 14 is a block diagram illustrating a main circuit configuration of a face-to-face type POS terminal according to a third embodiment;
FIG. 15 is a schematic diagram illustrating an appearance configuration of the same face-to-face type POS terminal;
FIG. 16 is a flowchart illustrating a procedure of main information processing executed by a processor of the same face-to-face type POS terminal according to a main program;
FIG. 17 is a flowchart illustrating the procedure of the main information processing executed by the processor of the same face-to-face type POS terminal according to the main program; and
FIG. 18 is a flowchart illustrating the procedure of the main information processing executed by the processor of the same face-to-face type POS terminal according to the main program.

### DETAILED DESCRIPTION

An exemplary embodiment provides an accounting apparatus capable of reducing congestion in an accounting place.

According to one embodiment, the accounting apparatus includes a reading unit, a receiving unit, a processing unit, and a forcing unit. The reading unit reads information of a purchased commodity. The receiving unit receives payment of a price. The processing unit executes settlement based upon the information of the purchased commodity read by the reading unit and information on the payment of the price received by the receiving unit. The forcing unit forces the settlement when number of items of the purchased commodities whose information is read by the reading unit reaches a regulated number of items.

Hereinafter, an embodiment of an accounting apparatus capable of reducing congestion of an accounting place will be described with reference to the drawings.

In the embodiment, a convenience store is exemplified as a store where the accounting apparatus is introduced. The accounting apparatus refers to an apparatus for executing accounting. The accounting includes commodity registration and settlement. The commodity registration and the settlement will be clarified by the following descriptions.

### First Embodiment

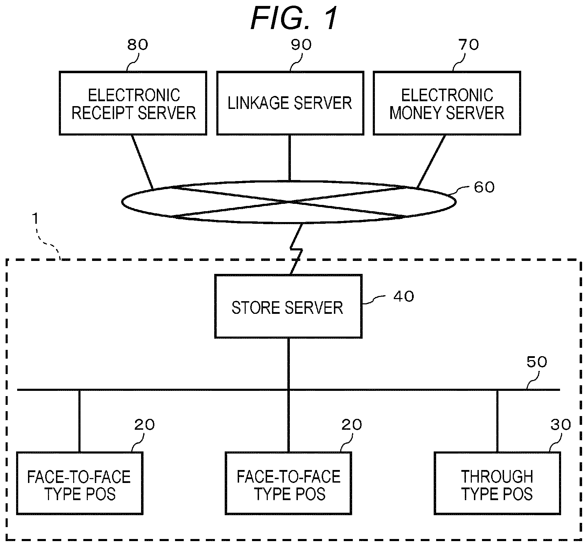

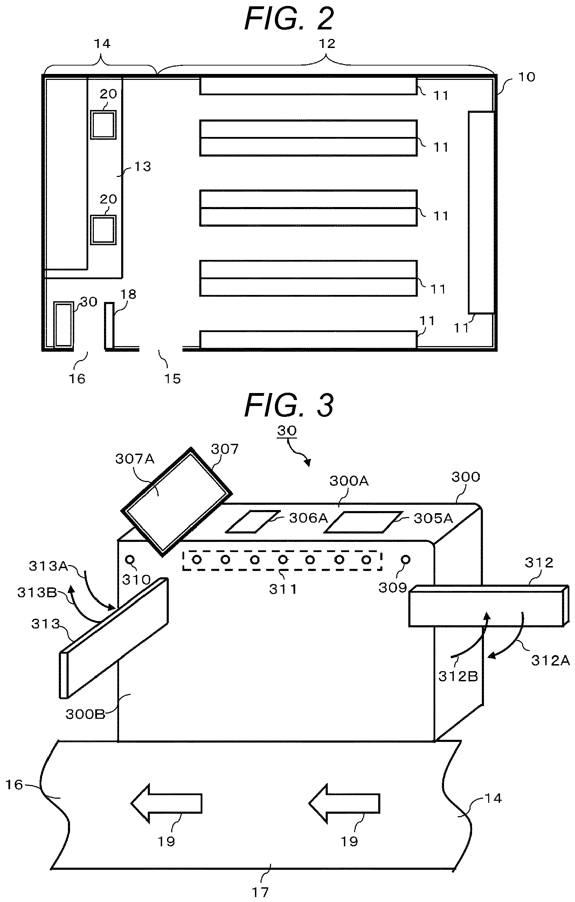

FIG. 1 is a block diagram illustrating a schematic configuration of a POS (Point of Sale) system 1 constructed at a convenience store 10 of the embodiment; and FIG. 2 is a schematic diagram illustrating a layout example of the same convenience store 10. As illustrated in FIG. 1, the POS system 1 includes a face-to-face type POS terminal 20, a through type POS terminal 30, a store server 40, and a network 50. The network 50 is a system for connecting the face-to-face type POS terminal 20 and the through type POS terminal 30 to the store server 40 in a freely communicable manner. The network 50 is, for example, a wired local area network (LAN). The network 50 may be a wireless LAN conforming to a wireless communication standard such as Wi-Fi, and the like. In the network 50, for example, the wired LAN and the wireless LAN may be mixed so that the face-to-face type POS terminal 20 and the store server 40 are connected to each other by the wired LAN and the through type POS terminal 30 and the store server 40 are connected to each other by the wireless LAN.

The face-to-face type POS terminal 20 is an accounting apparatus corresponding to a face-to-face accounting method that performs processing from registration of a commodity purchased by a customer to accounting thereof by an operation of a sales clerk. Since the face-to-face type POS terminal 20 is introduced at an existing convenience store and is well known, a detailed description thereof will be omitted.

The through type POS terminal 30 is an accounting apparatus capable of smoothly completing accounting by a self-accounting method without bagging for a customer who purchases only a small number of items. Details of the through type POS terminal 30 will be described later.

The number of face-to-face type POS terminals 20 and the through type POS terminals 30 is not particularly limited. In the embodiment, the number of the face-to-face type POS terminals 20 is set to two units and the number of through type POS terminals 30 is set to one unit.

As illustrated in FIG. 2, the convenience store 10 is divided into a sales place 12 where a plurality of commodity display shelves 11 are arranged and an accounting place 14 where an accounting counter 13 is arranged. An entrance 15 into the store is provided in the vicinity of a boundary between the sales place 12 and the accounting place 14. Apart from the entrance 15, an exit 16 designed for the customer who purchases only a small number of items is provided. The exit 16 is provided closer to the accounting place 14 than the entrance 15. The through type POS terminal 30 is installed at the exit 16. The face-to-face type POS terminal 20 is installed on the accounting counter 13.

The layout example of the convenience store 10 is not limited to the layout illustrated in FIG. 2. A customer who enters the store at least from the entrance 15 purchases a commodity displayed on the commodity display shelf 11 of the sales place 12 and performs accounting in the accounting place 14. At this time, a part of the customers who purchase only a small number of items of one or two items performs the accounting by using the through type POS terminal 30, and then goes out of the store from an exit path. Other customers perform the accounting by using the face-to-face type POS terminal 20, and then go out of the store from the entrance 15. Any layout capable of securing such a flow line may be adopted.

The store server 40 is a computer device that unitarily manages registration work and accounting work executed by the face-to-face type POS terminal 20 and the through type POS terminal 30. The store server 40 manages sales, inventory, and the like of each commodity by collecting and totalizing sales data of each commodity registered by the face-to-face type POS terminal 20 and the through type POS terminal 30. The store server 40 manages the sales, loss, and the like of the store by collecting and totalizing accounting data processed by the face-to-face type POS terminal 20 and the through type POS terminal 30.

The store server 40 is connected to a wide area network 60. An electronic money server 70, an electronic receipt server 80, a linkage server 90, and the like are connected to the wide area network 60. The store server 40 can perform data communication with the electronic money server 70, the electronic receipt server 80, the linkage server 90, and the like via the wide area network 60.

The electronic money server 70 manages the balance of electronic money owned by a user of the electronic money. A storage device of the electronic money server 70 stores the electronic money balance of the user in association with a first user ID for identifying the user. The electronic money server 70 updates the electronic money balance of the user who performs electronic money settlement by the face-to-face type POS terminal 20 or the through type POS terminal 30 by the data communication with the store server 40.

The electronic receipt server 80 manages electronic receipt data to be issued to a user of an electronic receipt. A storage device of the electronic receipt server 80 stores the electronic receipt data created by the face-to-face type POS terminal 20 or the through type POS terminal 30 for the user in association with a second user ID for identifying the user. The electronic receipt data are obtained by electronizing a receipt in which details of commodities purchased by the user, a settlement amount, and the like are recorded. The electronic receipt data stored in the storage device of the electronic receipt server 80 can be browsed in such a manner that the user to be identified by the second user ID associated with the electronic receipt data accesses the electronic receipt server 80 by using a smart phone, a tablet terminal, and the like.

When a user of the electronic money and a user of the electronic receipt are the same person, the linkage server 90 performs linkage between the first user ID and the second user ID with respect to the user. The user of the electronic money owns a recording medium in which the first user ID is recorded. The recording medium is, for example, an IC card, a smart phone, and the like. In the same manner, the user of the electronic receipt owns a recording medium in which the second user ID is recorded. The recording medium is, for example, an IC card, a smart phone, and the like.

When the electronic money settlement is executed in the face-to-face type POS terminal 20 or the through type POS terminal 30, the settlement amount is transmitted to the electronic money server 70 together with the first user ID. The electronic money server 70 compares the electronic money balance associated with the first user ID with the settlement amount. The electronic money server 70 approves the electronic money settlement when the electronic money balance is equal to or greater than the settlement amount, and then updates the electronic money balance to an amount reduced by the settlement amount. When the electronic money settlement is approved, the electronic receipt data are generated in the face-to-face type POS terminal 20 or the through type POS terminal 30, and the electronic receipt data are transmitted to the electronic receipt server 80 together with the first user ID. The electronic receipt server 80 communicates with the linkage server 90 and acquires the second user ID cooperating with the first user ID. The electronic receipt server 80 stores the electronic receipt data in the storage device in association with the second user ID acquired from the linkage server 90. In this manner, when the user of the electronic money is also the user of the electronic receipt, the electronic receipt data can be automatically provided to the user by performing the electronic money settlement.

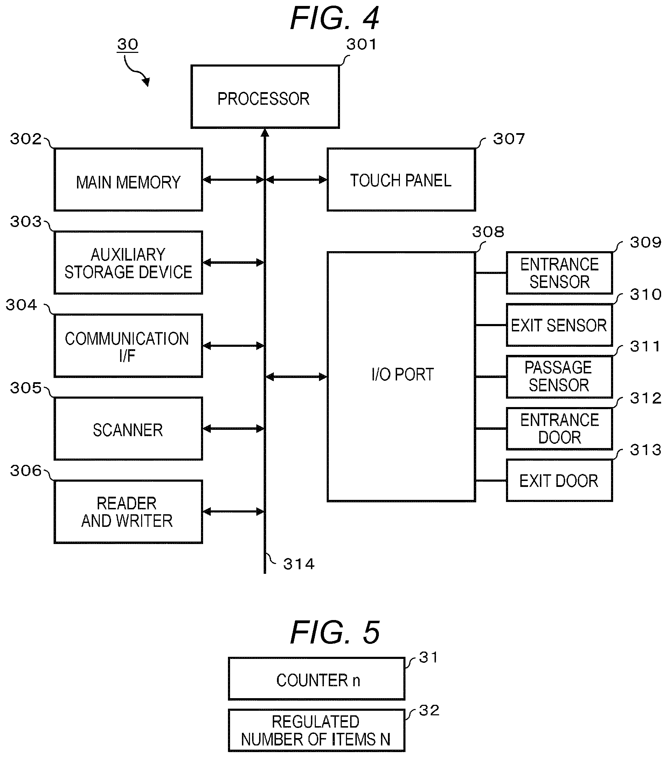

FIG. 3 is a schematic diagram illustrating an appearance configuration of the through type POS terminal 30; and FIG. 4 is a block diagram illustrating a main circuit configuration of the through type POS terminal 30. As illustrated in FIG. 3, the through type POS terminal 30 is arranged along a passage 17 leading to the exit 16 from the accounting place 14. Specifically, a housing 300 of the through type POS terminal 30 is installed on one side of the passage 17. As illustrated in Fig. 2, a partition 18 is installed on the other side of the passage 17 so as to face the housing 300. That is, the passage 17 is formed between the housing 300 and the partition 18. The passage is not necessarily required to be formed by the housing 300 and the partition 18 as described in the embodiment, and when a plurality of the housings 300 are provided, the passage may be a space formed by other housings 300.

A customer who is the user of the electronic money and the electronic receipt, who purchases only a small number of items, and who does not require bagging, walks through the passage 17 in a direction indicated by an arrow 19 from the accounting place 14 toward the exit 16. When walking through the passage 17, the customer himself or herself performs the registration of the commodity to be purchased and the accounting by the electronic money settlement by operating the through type POS terminal 30. When the customer completes the accounting, the customer goes out of the store from the exit 16 without bagging the commodity. The through type POS terminal 30 enables the customer to perform the above-described behavior.

As illustrated in FIG. 4, the through type POS terminal 30 includes a processor 301, a main memory 302, an auxiliary storage device 303, a communication interface 304, a scanner 305, a reader and writer 306, a touch panel 307, an input/output (I/O) port 308, an entrance sensor 309, an exit sensor 310, a passage sensor 311, an entrance door 312, an exit door 313, and a system transmission path 314. The system transmission line 314 includes an address bus, a data bus, a control signal line, and the like. In the through type POS terminal 30, the processor 301, the main memory 302, the auxiliary storage device 303, the communication interface 304, the scanner 305, the reader and writer 306, the touch panel 307, and the input/output (I/O) port 308 are connected to the system transmission line 314. In the through type POS terminal 30, a computer is formed by the processor 301, the main memory 302, the auxiliary storage device 303, and the system transmission line 314 for connecting the processor 301, the main memory 302, and the auxiliary storage device 303.

The processor 301 corresponds to a central part of the computer. The processor 301 controls each part for realizing various functions as the through type POS terminal 30 according to an operating system or an application program. The processor 301 is, for example, a central processing unit (CPU).

The main memory 302 corresponds to a main storage part of the computer. The main memory 302 includes a nonvolatile memory area and a volatile memory area. The main memory 302 stores the operating system or the application program in the nonvolatile memory area. The main memory 302 also stores data which are necessary for the processor 301 to execute processing for controlling each part in the nonvolatile or volatile memory area in some cases. The main memory 302 uses the volatile memory area as a work area where data are appropriately rewritten by the processor 301. The nonvolatile memory area is, for example, a read only memory (ROM) . The volatile memory area is, for example, a random access memory (RAM).

The auxiliary storage device 303 corresponds to an auxiliary storage part of the computer. For example, an electric erasable programmable read-only memory (EEPROM), a hard disk drive (HDD), or a solid state drive (SSD), and the like can become the auxiliary storage device 303. The auxiliary storage device 303 stores data used for various kinds of processing performed by the processor 301, data created by the processing performed by the processor 301, and the like. The auxiliary storage device 303 also stores the application program in some cases.

The communication interface 304 performs the data communication according to the store server 40 connected via the network 50 and a communication protocol.

The scanner 305 is a device for reading a code symbol such as a bar code, a two-dimensional data code, and the like attached to a commodity. The scanner 305 may be a type of reading the code symbol by scanning a laser beam. The scanner 305 may be a type of reading the code symbol from an image captured by an imaging device.

As illustrated in FIG. 3, a reading window 305A of the scanner 305 is provided on the side close to the accounting place 14 of an upper surface 300A of the housing 300. When the user of the through type POS terminal 30 holds a code symbol attached to the commodity on the reading window 305A, the scanner 305 scans the code symbol and reads a commodity ID, and the like. Here, the scanner 305 functions as a reading unit of the through type POS terminal 30.

The reader and writer 306 reads data recorded on the recording medium in a non-contact manner by using short-range wireless communication and writes the data in the recording medium. Typically, the recording medium is a non-contact type IC card, a smart phone, and the like in which the first user ID is recorded. The reader and writer 306 may read or write data with respect to other recording media.

As illustrated in FIG. 3, an antenna 306A of the reader and writer 306 is provided approximately at a center of the upper surface 300A of the housing 300. When the user of the through type POS terminal 30 holds the recording medium over the antenna 306A, the reader and writer 306 reads the data recorded on the recording medium by the short-range wireless communication. When there are writing data with respect to the recording medium held by the antenna 306A, the reader and writer 306 writes data in the recording medium by the short-range wireless communication. Here, the reader and writer 306 functions as a receiving unit of the through type POS terminal 30.

The touch panel 307 functions as an input device and a display device of the through type POS terminal 30. The touch panel 307 receives an operation input by a user of the through type POS terminal 30. The touch panel 307 displays necessary information to the user.

As illustrated in FIG. 3, the touch panel 307 is provided on the side close to the exit 16 of the upper surface 300A of the housing 300. The touch panel 307 is mounted on the upper surface 300A of the housing 300 with a screen 307A thereof directed toward the side of the entrance to the passage 17.

The I/O port 308 has a function of inputting the respective sensing signals from the entrance sensor 309, the exit sensor 310, and the passage sensor 311 and a function of outputting an opening and closing signal to the entrance door 312 and the exit door 313.

As illustrated in FIG. 3, the entrance sensor 309, the exit sensor 310, and the passage sensor 311 are provided on a side surface 300B opposite to the partition 18 of the housing 300. The entrance sensor 309 is provided on the side close to the accounting place 14. The exit sensor 310 is provided on the side close to the exit 16. The passage sensor 311 is provided between the entrance sensor 309 and the exit sensor 310. The passage sensor 311 has a structure in which a plurality of sensing elements are arranged along the passage 17, and outputs an ON signal when at least one sensing element is turned on.

The entrance sensor 309 detects a user entering the passage 17 from the accounting place 14. The exit sensor 310 detects a user who exits the store from the passage 17. The passage sensor 311 detects a user walking on the passage 17. The entrance sensor 309, the exit sensor 310, and the passage sensor 311 are so-called human sensors. A type of the human sensor is not particularly limited. For example, a thermal sensor using infrared rays or an optical sensor using reflection of light may be used therefor.

As illustrated in FIG. 3, the entrance door 312 and the exit door 313 are provided on the side surface 300B opposite to the partition 18 of the housing 300. The entrance door 312 is provided on the side close to the accounting place 14. One side of the entrance door 312 is mounted on the housing 300 as a center of rotation, and as illustrated by an arrow 312A or an arrow 312B, an opening and closing operation of an approach path from the accounting place 14 to the passage 17 is performed by rotating back and forth in parallel with the surface of the passage 17. The exit door 313 is provided on the side close to the exit 16. One side of the exit door 313 is mounted on the housing 300 as a center of rotation, and as illustrated by an arrow 313A or an arrow 313B, an opening and closing operation of an exit path from the passage 17 to the exit 16 is performed by rotating back and forth in parallel with the surface of the passage 17.

The entrance door 312 and the exit door 313 illustrated in FIG. 3 are examples. Structures of the entrance door 312 and the exit door 313 are not limited to those illustrated in FIG. 3. For example, one point mounted on the side surface 300B of the housing 300 may be used as the center of rotation, and the approach path or the exit path may be opened and closed by rotating back and forth in a direction perpendicular to the surface of the passage 17. Alternatively, the entrance door 312 and the exit door 313 may be provided on the partition 18 opposite to the housing 300. Here, the entrance door 312 functions as a first blocking unit of the through type POS terminal 30. The exit door 313 functions as a second blocking unit or a blocking unit of the through type POS terminal 30.

As illustrated in FIG. 5, the through type POS terminal 30 having the above-described configuration includes a counter area 31 and an area of a regulated number of items 32. The counter area 31 is an area for describing a count value n. The counter area 31 is formed in the volatile area of the main memory 302. The area of the regulated number of items 32 is an area for describing a regulated number of items N. The area of the regulated number of items 32 is formed in the auxiliary storage device 303.

The regulated number of items N is described in advance in the area of the regulated number of items 32. The regulated number of items N is an upper limit value of the number of commodities whose accounting can be performed by the through type POS terminal 30. That is, the through type POS terminal 30 does not permit the registration of the number of commodities exceeding the regulated number of items. The through type POS terminal 30 is a dedicated accounting apparatus capable of smoothly completing the accounting by the self-accounting method without bagging for a customer who purchases only a small number of items. Therefore, it is desirable that the regulated number of items N is typically "1" or "2". However, it does not deny that the regulated number of items N is equal to or greater than 3. It is arbitrary to specify the number of the regulated number of items N. A manager of the POS system 1 can appropriately set the regulated number of items N from the purchase history of the commodity, and the like. It is also possible to change the regulated number of items N once set in the area of the regulated number of items 32. The regulated number of items N may be automatically changed depending on a time zone of one day or a day of the week, and the like. That is, the computer including the processor 301 as a main constituent functions as a setting unit for setting an arbitrary regulated number of items N in the area of the regulated number of items 32.

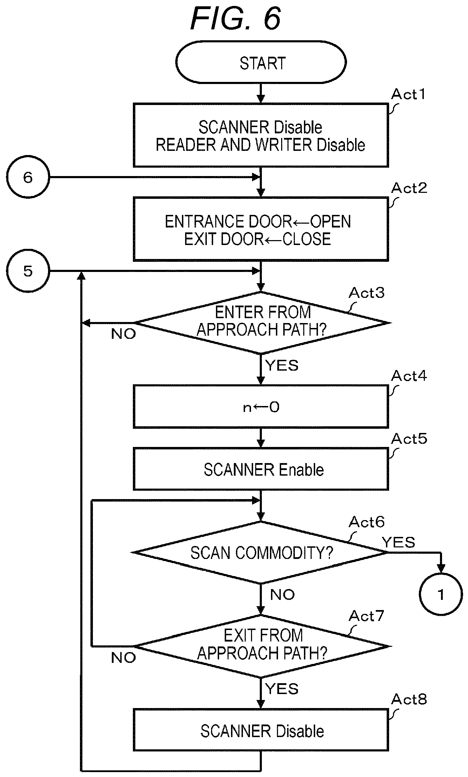

FIGS. 6 to 9 are flowcharts illustrating procedures of main information processing executed by the processor 301 of the through type POS terminal 30 according to a main program. Hereinafter, an operation of the through type POS terminal 30 will be described by using the flowcharts. An operation thereof described below is one example. If the same result can be obtained, the procedures and contents of the operation are not particularly limited.

When a power source of the through type POS terminal 30 is supplied on and the main program is activated, the processor 301 respectively outputs a disable signal to the scanner 305 and the reader and writer 306 as Act1. Both the scanner 305 and the reader and writer 306 stop the functions thereof by the disable signal. Therefore, even though a code symbol attached to the commodity is held on the reading window 305A, the scanner 305 does not read the code symbol thereof. Even though the recording medium such as the non-contact type IC card, the smart phone, and the like is held over the antenna 306A, the reader and writer 306 does not read the data of the recording medium.

The processor 301 controls an opening operation of the entrance door 312 and a closing operation of the exit door 313 as Act2. By the control thereof, an opening signal is outputted from the I/O port 308 to the entrance door 312. A closing signal is outputted from the I/O port 308 to the exit door 313. As a result, the entrance door 312 rotates in the direction of the arrow 312B in FIG. 3, thereby opening the approach path to the passage 17. The exit door 313 rotates in the direction of the arrow 313A in FIG. 3, thereby closing the exit path from the passage 17. Accordingly, the user of the through type POS terminal 30 can enter the passage 17 from the accounting place 14. However, the user entering the passage 17 cannot exit the store from the exit 16. The user entering the passage 17 can return to the accounting place 14.

The processor 301 confirms whether the user enters from the approach path as Act3. When both detection signals of the entrance sensor 309 and the passage sensor 311 are turned off and the entry of the user can not be confirmed, the processor 301 determines NO in Act3 and returns to Act3 again. That is, the processor 301 continues to wait for the user to enter from the approach path.

When the detection signal of the entrance sensor 309 is changed from OFF to ON and the detection signal of the passage sensor 311 is changed from OFF to ON, the processor 301 determines that the user enters from the approach path. At this time, the processor 301 determines YES in Act3 and proceeds to Act4. The processor 301 resets the count value n of the counter area 31 to "0" as Act4.

The processor 301 outputs an enable signal to the scanner 305 as Act5. The scanner 305 validates the function thereof by the enable signal. Therefore, when the user entering from the approach path holds a code symbol attached to the commodity on the reading window 305A, the scanner 305 reads the code symbol.

The processor 301 confirms the presence or absence of commodity scanning as Act6. That is, the processor 301 determines that there is the commodity scanning when the code symbol attached to the commodity is read by the scanner 305. For example, when there is no reading of the commodity ID by the scanner 305 even after a certain time has elapsed after detecting that the user enters from the approach path, the processor 301 determines that there is no commodity scanning. When there is no commodity scanning, the processor 301 confirms whether the user exists from the approach path as Act7. When the passage sensor 311 is ON and the exit of the user can not be confirmed, the processor 301 determines NO in Act7 and returns to Act6. Therefore, the processor 301 waits for the commodity scanning to be performed or waits for the user to exit from the approach path by Act6 and Act7.

In the standby states of Act6 and Act7, when the passage sensor 311 is changed from ON to OFF and then the entrance sensor 309 is changed from ON to OFF, the processor 301 confirms that the user exits from the approach path. When the user exits from the approach path, the processor 301 determines YES in Act7 and proceeds to Act8. The processor 301 outputs a disable signal to the scanner 305 as Act8. The scanner 305 stops the function thereof by the disable signal.

The processor 301 outputting the disable signal to the scanner 305 returns to Act3. That is, the processor 301 continues to wait for the user to enter again from the approach path.

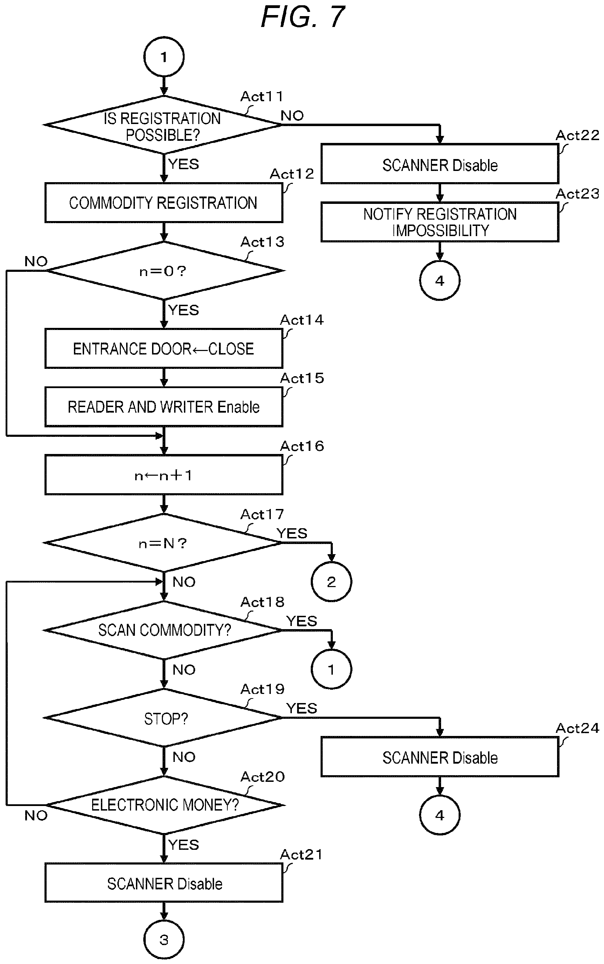

The processor 301 determines YES in Act6 when there is the commodity scanning in the standby states of Act6 and Act7 and proceeds to Act11 in FIG. 7. The processor 301 specifies a commodity to which the code symbol is attached from the code symbol read by the scanner 305 as Act11. Next, the processor 301 confirms whether the commodity is a commodity which can be registered in the through type POS terminal 30.

For example, in the case of a commodity with age limit such as alcoholic beverages, tobacco, and the like, it is necessary for a sales clerk to confirm the age of the customer. A pharmaceutical product belonging to a first category or a second category is required to be provided with information by a pharmacist or a registered seller. The accounting of such a commodity with age limit and a medicine requiring information provision cannot be performed by the through type POS terminal 30 of the self-accounting method. Therefore, a list of commodities whose accounting cannot be performed by the through type POS terminal 30 is stored in the auxiliary storage device 303. The processor 301 makes it impossible to perform registration when the commodity specified from the code symbol is on the list, and makes it possible to perform the registration when the commodity is not on the list.

When the registration is not possible, the processor 301 determines NO in Act11 and proceeds to Act22. The processor 301 outputs a disable signal to the scanner 305 as Act22. The scanner 305 stops the function thereof by the disable signal. Accordingly, the user cannot perform the registration of the commodity. At this time, the reader and writer 306 stops the function thereof. Accordingly, the user cannot perform the accounting by the electronic money.

The processor 301 causes the touch panel 307 to display a message notifying that the registration of the commodity is not possible as Act23. The message desirably includes contents instructing that the accounting of the commodity purchased by the user cannot be performed by the through type POS terminal and the accounting thereof is performed by the face-to-face type POS terminal 20 of the accounting place 14.

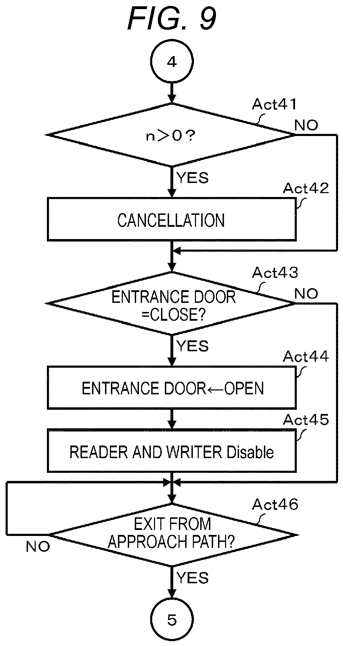

Thereafter, the processor 301 proceeds to Act41 in FIG. 9. The process after Act41 will described later.

On the other hand, when the registration is possible, the processor 301 determines YES in Act11 and proceeds to Act12. The processor 301 executes commodity registration as Act12. That is, the processor 301 acquires commodity data such as a commodity ID, a commodity name, a price, and the like of the commodity specified by the code symbol from the store server 40. The processor 301 generates commodity sales data including the commodity ID, the commodity name, and the price, a number of items of sales, a sales price, and the like based upon the commodity data, and registers those in the main memory 302. The processor 301 displays the commodity name, the commodity price, and the like on the touch panel 307. The above-described commodity registration is well-known processing executed in an existing POS terminal including the face-to-face type POS terminal 20.

When the commodity registration is completed, the processor 301 checks the count value n as Act13. When the count value n is "0", the processor 301 determines YES in Act13 and proceeds to Act14. The processor 301 controls the closing operation of the entrance door 312 as Act14. By the closing control thereof, a closing signal is outputted from the I/O port 308 to the entrance door 312. As a result, the entrance door 312 rotates in the direction of the arrow 312A in FIG. 3, thereby closing the approach path. Accordingly, when the commodity registration is executed, a customer other than the user in the passage 17 is prohibited from entering the passage 17.

The processor 301 outputs an enable signal to the reader and writer 306 as Act15. The reader and writer 306 validates the function thereof by the enable signal. Accordingly, when the user in the passage 17 holds the recording medium related to the electronic money over the antenna 306A, the data of the electronic money recorded in the recording medium, that is, the first user ID, are read by the reader and writer 306 in the non-contact manner.

When Act14 and Act15 are completed, the processor 301 proceeds to Act16. On the other hand, when the count value n is equal to or greater than "1" in Act13, the processor 301 determines NO in Act13, skips Act14 and Act15, and then proceeds to Act16.

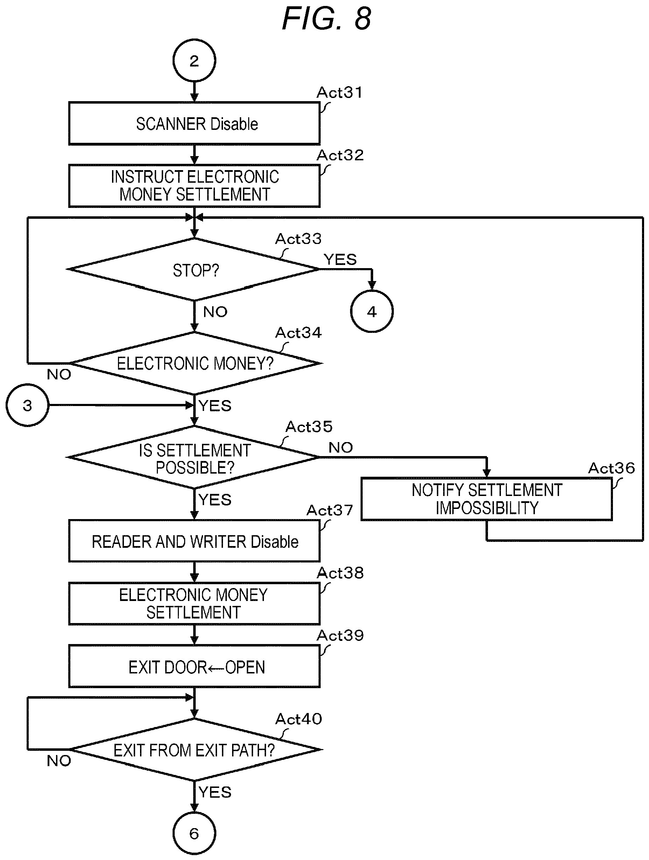

The processor 301 counts up the count value n only by "1" as Act16. The processor 301 confirms whether the count value n reaches the regulated number of items N as Act17. When the count value n reaches the regulated number of items N, the processor 301 determines YES in Act17 and proceeds to Act31 in FIG. 8. The processing after Act31 will be described later.

On the other hand, when the count value n does not reach the regulated number of items N, the processor 301 determines NO in Act17 and proceeds to Act18. The processor 301 confirms the presence or absence of the commodity scanning as Act18. When there is no commodity scanning, the processor 301 determines NO in Act18 and proceeds to Act19. The processor 301 confirms whether a stop button is operated as Act19. The stop button is displayed on the screen 307A of the touch panel 307. When the stop button is not operated, the processor 301 determines NO in Act19 and proceeds to Act20. The processor 301 confirms whether the data of the electronic money are read by the reader and writer 306 as Act20. When the data of the electronic money are not read, the processor 301 determines NO in Act20 and returns to Act18. Therefore, the processor 301 waits for the commodity scanning to be performed, waits for the stop button to be operated, or waits for the data of the electronic money to be read by Act18 to Act20.

As described above, the regulated number of items N is desirably "1" or "2". When the regulated number of items N is "1", since the processor 301 determines YES in Act17, the processing does not become the standby states of Act18 to Act20. When the regulated number of items N is "2", the processing becomes the standby states of Act18 to Act20.

When it is confirmed that the commodity scanning is performed in the standby states of Act18 to Act20, the processor 301 determines YES in Act18 and returns to Act11. Thereafter, the processor 301 executes the processing after Act11 again.

Therefore, when the scanned commodity is a commodity that can be registered, the registration of the commodity is executed. The count value n is counted up only by "1". At this time, since the count value n is equal to or greater than "1", Act14 and Act15 is not executed. When the count value n reaches the regulated number of items N, the processing proceeds to Act31 in FIG. 8.

When the stop button is operated in the standby states of Act18 to Act20, the processor 301 determines YES in Act19 and proceeds to Act24. The processor 301 outputs a disable signal to the scanner 305 as Act24. The scanner 305 stops the function thereof by the disable signal. Thereafter, the processor 301 proceeds to Act41 in FIG. 9.

When the data of the electronic money are read by the reader and writer 306 in the standby states of Act18 to Act20, the processor 301 determines YES in Act20 and proceeds to Act21. The processor 301 outputs a disable signal to the scanner 305 as Act21. The scanner 305 stops the function thereof by the disable signal. Thereafter, the processor 301 proceeds to Act35 in FIG. 8. The processing after Act35 will be described later.

As described above, when the count value n reaches the regulated number of items N, the processor 301 proceeds to Act31 in FIG. 8. The processor 301 outputs a disable signal to the scanner 305 as Act31. The scanner 305 stops the function thereof by the disable signal. The processor 301 causes the touch panel 307 to display a message instructing that the settlement by the electronic money should be performed as Act32. The message desirably includes a content instructing that the user should hold the recording medium of the electronic money over the antenna 306A. Accordingly, the user in the passage holds the recording medium of the electronic money over the antenna 306A. Alternatively, when the user desires a payment method other than the electronic money, the user operates the stop button.

The processor 301 confirms whether the stop button is operated as Act33. When the stop button is not operated, the processor 301 determines NO in Act33 and proceeds to Act34. The processor 301 confirms whether the data of the electronic money are read by the reader and writer 306 as Act34. When the data of the electronic money are not read, the processor 301 determines NO in Act34 and returns to Act33. Therefore, the processor 301 waits for the stop button to be operated or waits for the data of the electronic money to be read by Act33 and Act34.

When the stop button is operated in the standby states of Act33 and Act34, the processor 301 determines YES in Act33 and proceeds to Act41 in FIG. 9.

When the data of the electronic money are read by the reader and writer 306 in the standby states of Act33 and Act34, the processor 301 determines YES in Act34 and proceeds to Act35.

As described above, when the data of the electronic money are read by the reader and writer 306 after the count value n reaches the regulated number of items N, or when the reader and writer 306 reads the data of the electronic money before the count value n reaches the regulated number of items N, the processor 301 proceeds to Act35. The processor 301 confirms whether the settlement by the electronic money is possible as Act35. That is, the processor 301 confirms whether the electronic money balance being managed by the electronic money server 70 in association with the first user ID read by the reader and writer 306 is equal to or greater than the settlement amount. The settlement amount is calculated by the commodity registration of Act12.

When the electronic money balance is insufficient for the settlement amount, the electronic money settlement is not possible. When the electronic money settlement is not possible, the processor 301 determines NO in Act35 and proceeds to Act36. The processor 301 causes the touch panel 307 to display a message notifying that the settlement is not possible as Act36. The message desirably includes contents indicating that the balance of the electronic money is insufficient such that the settlement is not possible, and that the stop button is operated when a payment method other than the electronic money is selected. Thereafter, the processor 301 returns to Act33. That is, the processor 301 returns to the standby states of Act33 and Act34.

On the other hand, when the electronic money balance is equal to or greater than the settlement amount such that the electronic money settlement is possible, the processor 301 determines YES in Act35 and proceeds to Act37. The processor 301 outputs a disable signal to the reader and writer 306 as Act37. The reader and writer 306 stops the function thereof by the disable signal.

The processor 301 executes electronic money settlement as Act38. This processing includes transmitting the data of the first user ID and settlement amount to the electronic money server 7, generating receipt data, and transmitting the generated receipt data to the electronic receipt server 80.

When the electronic money settlement is completed, the processor 301 controls the opening operation of the exit door 313 as Act39. By this control, the opening signal is outputted from the I/O port 308 to the exit door 313. As a result, the exit door 313 rotates in the direction of the arrow 313B in FIG. 3, thereby opening the exit path. Accordingly, when the settlement by the electronic money is completed, the user in the passage 17 can exit to the exit 16.

The processor 301 confirms whether the user exits from the exit path as Act40. When the passage sensor 311 is ON and the exit of the user can not be confirmed, the processor 301 determines NO in Act40 and returns to Act40. That is, the processor 301 continues to wait for the user to exit from the exit path.

When the detection signal of the passage sensor 311 is changed from ON to OFF and then the detection signal of the exit sensor 310 is changed from ON to OFF, the processor 301 determines that the user exits from the exit path. At this time, the processor 301 determines YES in Act40 and returns to Act2. The processor 301 controls the opening operation of the entrance door 312 and the closing operation of the exit door 313 as Act2. Thereafter, the processor 301 executes the processing after Act3 in the same manner as described above.

Next, the processor 301 confirms whether Act23 or Act24 is completed or whether the stop button is operated in Act33, after which when the processor 301 determines YES, the processor 301 proceeds to Act41 in FIG. 9. The processor 301 confirms whether the count value n is greater than "0" as Act41. When the count value n is greater than "0", that is, "1" or greater, the processor 301 determines YES in Act41 and proceeds to Act42. The processor 301 executes cancellation as Act41. The cancellation is canceling the sales data of the commodity registered in the commodity registration of Act12.

When the cancellation is completed, the processor 301 proceeds to Act43. On the other hand, when the count value n is "0", the processor 301 determines NO in Act41, skips Act42, and then proceeds to Act43. Therefore, when reaching Act41 without passing through the commodity registration of Act12, the cancellation is skipped. When the processing reaches Act41 after the commodity registration is completed, the cancellation is executed.

The processor 301 confirms whether the entrance door 312 is in an open state as Act43. For example, the processor 301 has a status in which a value varies when the closing operation of the entrance door 312 is controlled and when the opening operation thereof is controlled. The processor 301 confirms whether the entrance door 312 is in a closed state according to the value of the status.

When the entrance door 312 is in the closed state, the processor 301 determines YES in Act43 and proceeds to Act44. The processor 301 controls the opening operation of the entrance door 312 as Act44. By this control, the opening signal is outputted from the I/O port 308 to the entrance door 312. As a result, the entrance door 312 rotates in the direction of the arrow 312B in FIG. 3, thereby opening the approach path. The processor 301 outputs a disable signal to the reader and writer 306 as Act45. The reader and writer 306 stops the function thereof by the disable signal. Thereafter, the processor 301 proceeds to Act46.

On the other hand, when the entrance door 312 is in the open state, the processor 301 determines NO in Act43, skips Act44 and Act45, and then proceeds to Act46. Therefore, when the entrance door 312 reaches Act43 without performing the closing operation in Act14, Act44 and Act45 is skipped. When the processing reaches Act43 after the entrance door 312 performs the closing operation in Act14, Act44 and Act45 is executed.

The processor 301 confirms whether the user exits from the approach path as Act46. When the passage sensor 311 is ON and the exit of the user can not be confirmed, the processor 301 determines NO in Act46 and returns to Act46. Therefore, the processor 301 continues to wait for the user to exit from the approach path to the accounting place 14 according to Act46.

When the passage sensor 311 is changed from ON to OFF and then the entrance sensor 309 is changed from ON to OFF, the processor 301 determines that the user exits from the approach path to the accounting place 14. At this time, the processor 301 determines YES in Act46 and returns to Act3. Thereafter, the processor 301 executes the processing after Act3 in the same manner as described above.

Here, the computer of the through type POS terminal 30 including the processor 301 as a main constituent functions as a processing unit by executing Act38. The computer functions as a forcing unit by executing Act4, Act15 to Act17, Act31, Act32, and Act34. The computer functions as a control unit by executing Act2, Act14, Act39, and Act44.

The through type POS terminal 30 is operated as described above. Therefore, when a customer who is the user of the electronic receipt and performs the settlement by the electronic money purchases only a small number of items, the accounting of the purchased commodity can be performed by himself or herself by using the through type POS terminal 30. Specifically, when the regulated number of items N is "1", and when the customer purchases only one item, the accounting can be performed by using the through type POS terminal 30. When the regulated number of items N is "2", the customer can perform the accounting by using the through type POS terminal 30 when purchasing the commodities only up to two items.

The customer who uses the through type POS terminal 30 enters the passage 17 from the accounting place 14 and holds the code symbol of the purchased commodity on the reading window 305A. At this time, when the purchased commodity is a commodity that can be purchased, the commodity registration is executed in the through type POS terminal 30. The entrance door 312 is closed. Accordingly, the next customer cannot enter the passage 17.

Here, when the regulated number of items N is "1", the message instructing that the settlement by the electronic money should be performed is displayed on the touch panel 307. The function of the scanner 305 is stopped. As a result, the settlement by the electronic money is forced in the through type POS terminal 30. At this time, a customer having the second purchased commodity operates the stop button. Then, since the opening operation of the entrance door 312 is performed, the customer can return from the approach path to the accounting place 14.

On the other hand, when the regulated number of items N is "2", the above-described message is not displayed thereon. The function of the scanner 305 is not stopped. Accordingly, the customer can hold the code symbol of the second purchased commodity on the reading window 305A. At this time, when the second purchased commodity is also a commodity that can be purchased, the commodity registration is executed in the through type POS terminal 30. Next, the message instructing that the settlement by the electronic money should be performed is displayed on the touch panel 307. The function of the scanner 305 is stopped. As a result, in the through type POS terminal 30, the settlement by the electronic money is forced.

The customer who completes the registration of the purchased commodity holds the recording medium of the electronic money over the antenna 306A. Then, the reader and writer 306 reads the data of the electronic money from the recording medium. When the electronic money balance is equal to or greater than the settlement amount of the purchased commodity, the settlement by the electronic money is executed in the through type POS terminal 30. The electronic receipt data are transmitted to the electronic receipt server 80. The electronic receipt data are stored in the storage device of the electronic receipt server 80 in association with the second user ID set in the linkage server 90 so as to cooperate with the first user ID recorded in the recording medium of the electronic money. Accordingly, the customer can browse the contents of the electronic receipt data by accessing the electronic receipt server 80 by using a smart phone, a tablet terminal, and the like.

When the settlement of the electronic money is completed, the opening operation of the exit door 313 is performed. Accordingly, the customer who completes the settlement can exit the store from the exit path through the exit 16.

As described above, the customer who purchases the commodity within the regulated number of items N first holds the code symbol of the purchased commodity on the reading window 305A, and then holds the recording medium of the electronic money over the antenna 306A. By performing the above-described operation, the customer can complete the accounting of the purchased commodity by using the through type POS terminal 30. At this time, the customer does not bag the commodity. The customer also does not receive the receipt. Accordingly, the customer can complete the accounting of the purchased commodity almost without stopping on the passage 17. As a result, processing time required for the accounting can be dramatically shortened. Since many customers who purchase commodity within the regulated number of items N are encouraged to use the through type POS terminal 30, the congestion of accounting work can be reduced.

When the purchased commodity is set as a commodity that cannot be registered, the accounting thereof cannot be performed by the through type POS terminal 30. In such a case, the message notifying that the registration is not possible is displayed on the touch panel 307, and the opening operation of the entrance door 312 is performed. Accordingly, the customer can return from the approach path to the accounting place 14.

A customer who enters the passage 17 but purchases the commodity greater than the regulated number of items N or a customer who cannot perform the electronic money settlement also cannot perform the accounting by the through type POS terminal 30. The same is also true for a customer whose electronic money balance is insufficient. In such a case, the customer touches the stop button displayed on the touch panel 307. Then, since the opening operation of the entrance door 312 is performed, the customer can return from the approach path to the accounting place 14. At this time, since the cancellation is executed in the through type POS terminal 30, the sales data of the registered commodity are canceled. Therefore, management data of sales, inventory, and the like of each commodity executed in the store server 40 are not affected.

### Second Embodiment

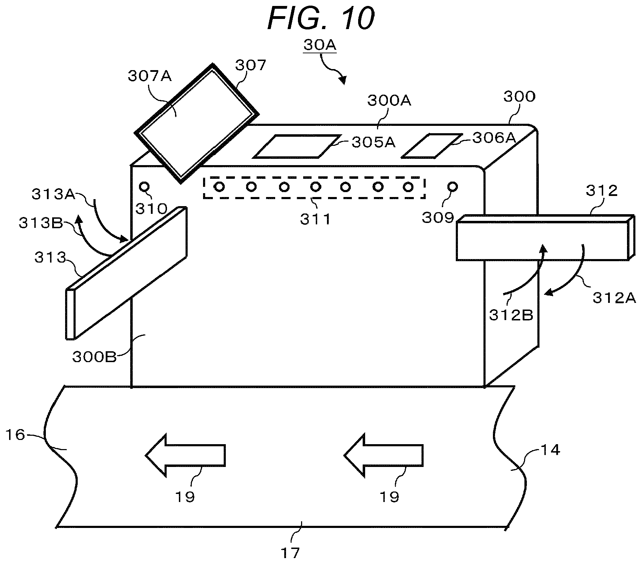

Next, a second embodiment will be described with reference to FIGS. 10 to 13. In order to distinguish the through type POS terminal 30 of the first embodiment from that of the second embodiment, the through type POS terminal of the second embodiment is denoted by a reference sign 30A.

FIG. 10 is a schematic diagram illustrating an appearance configuration of the through type POS terminal 30A. The through type POS terminal 30A has a different arrangement position between the reading window 305A and the antenna 306A in comparison with the through type POS terminal 30. That is, in the through type POS terminal 30A, the antenna 306A of the reader and writer 306 is provided on the side close to the accounting place 14 of the upper surface 300A of the housing 300. The reading window 305A of the scanner 305 is provided approximately at the center of the upper surface 300A of the housing 300.

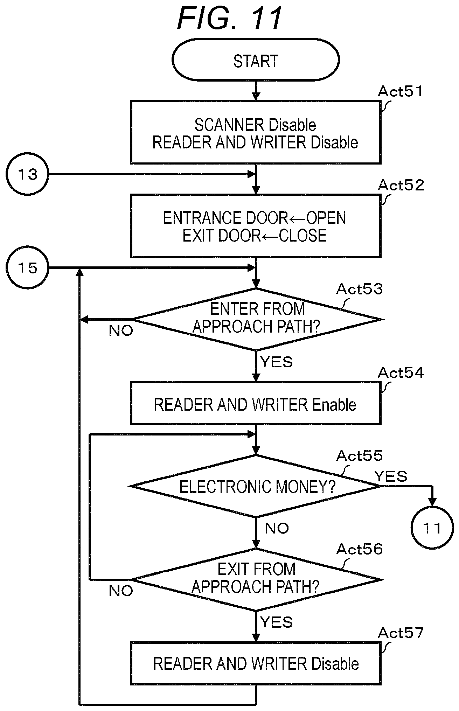

FIGS. 11 to 13 are flowcharts illustrating a procedure of main information processing executed by the processor 301 of the through type POS terminal 30A according to the main program. Hereinafter, an operation of the through type POS terminal 30A will be described by using the flowcharts. A detailed description will be omitted for the operation performed also in the first embodiment. An operation described below is one example. If the same result can be obtained, the procedures and contents of the operation are not particularly limited.

When a power source of the through type POS terminal 30A is supplied and the main program is activated, the processor 301 outputs a disable signal to the scanner 305 and the reader and writer 306, respectively as Act51. The processor 301 controls the opening operation of the entrance door 312 and the closing operation of the exit door 313 as Act52. The scanner 305 and the reader and writer 306 stop the functions thereof by Act51 and Act52. The entrance door 312 opens the approach path, and the exit door 313 closes the exit path.

The processor 301 continues to wait for a user to enter from the approach path as Act53. When the detection signal of the entrance sensor 309 is changed from OFF to ON and then the detection signal of the passage sensor 311 is changed from OFF to ON, the processor 301 determines that the user enters from the approach path. At this time, the processor 301 determines YES in Act53 and proceeds to Act54. The processor 301 outputs an enable signal to the reader and writer 306 as Act54. The reader and writer 306 validates the function thereof by the enable signal.

The processor 301 confirms whether the data of the electronic money are read by the reader and writer 306 as Act55. When the data of the electronic money are not read, the processor 301 determines NO in Act55 and proceeds to Act56. The processor 301 confirms whether the user exits from the approach path as Act56. When the passage sensor 311 is ON and the exit of the user can not be confirmed, the processor 301 determines NO in Act56 and returns to Act55. Therefore, the processor 301 waits for the data of the electronic money to be read or waits for the user to exit from the approach path by Act55 and Act56.

In the standby states of Act55 and Act56, when the passage sensor 311 is changed from ON to OFF and then the entrance sensor 309 is changed from ON to OFF, the processor 301 confirms that the user exits from the approach path. When the user exits from the approach path, the processor 301 determines YES in Act56 and proceeds to Act57. The processor 301 outputs a disable signal to the reader and writer 306 as Act57. The reader and writer 306 stops the function thereof by the disable signal.

The processor 301 outputting the disable signal to the reader and writer 306 returns to Act53. That is, the processor 301 continues to wait for the user to enter again from the approach path.

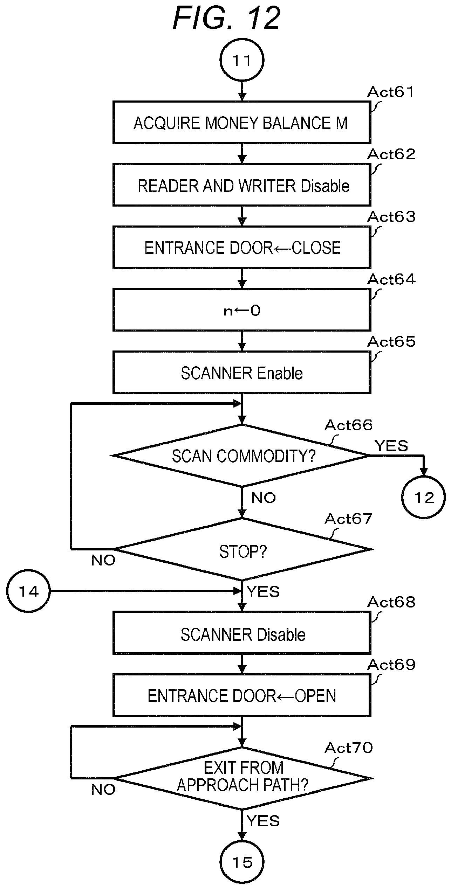

When the data of the electronic money are read by the reader and writer 306 in the standby states of Act55 and Act56, the processor 301 determines YES in Act55 and proceeds to Act61 in FIG. 12. The processor 301 acquires a balance M of the electronic money read by the reader and writer 306 as Act61. That is, the processor 301 acquires the electronic money balance M being managed in association with the first user ID included in the data of the electronic money from the electronic money server 70.

When the balance M of the electronic money can be acquired, the processor 301 outputs a disable signal to the reader and writer 306 as Act62. The reader and writer 306 stops the function thereof by the disable signal. The processor 301 controls the closing operation of the entrance door 312 as Act63. By this control, the entrance door 312 closes the approach path.

The processor 301 resets the count value n of the counter area 31 to "0" as Act64. The processor 301 outputs an enable signal to the scanner 305 as Act65. The scanner 305 validates the function thereof by the enable signal. Next, the processor 301 confirms the presence or absence of the commodity scanning as Act66. When there is no commodity scanning, the processor 301 confirms whether the stop button is operated as Act67. When the stop button is not operated, the processor 301 determines NO in Act67 and returns to Act66. Therefore, the processor 301 waits for the commodity scanning to be performed or waits for the stop button to be operated by Act66 and Act67.

When the stop button is operated in the standby states of Act66 and Act67, the processor 301 determines YES in Act67 and proceeds to Act68. The processor 301 outputs a disable signal to the scanner 305 as Act68. The scanner 305 stops the function thereof by the disable signal.

The processor 301 controls the opening operation of the entrance door 312 as Act69. By this control, the entrance door 312 opens the approach path. The processor 301 continues to wait for the user to exit from the approach path as Act70. Then, when the user exits from the approach path to the accounting place 14, the processor 301 determines YES in Act70 and returns to Act53. Thereafter, the processor 301 executes the processing after Act53 in the same manner as described above.

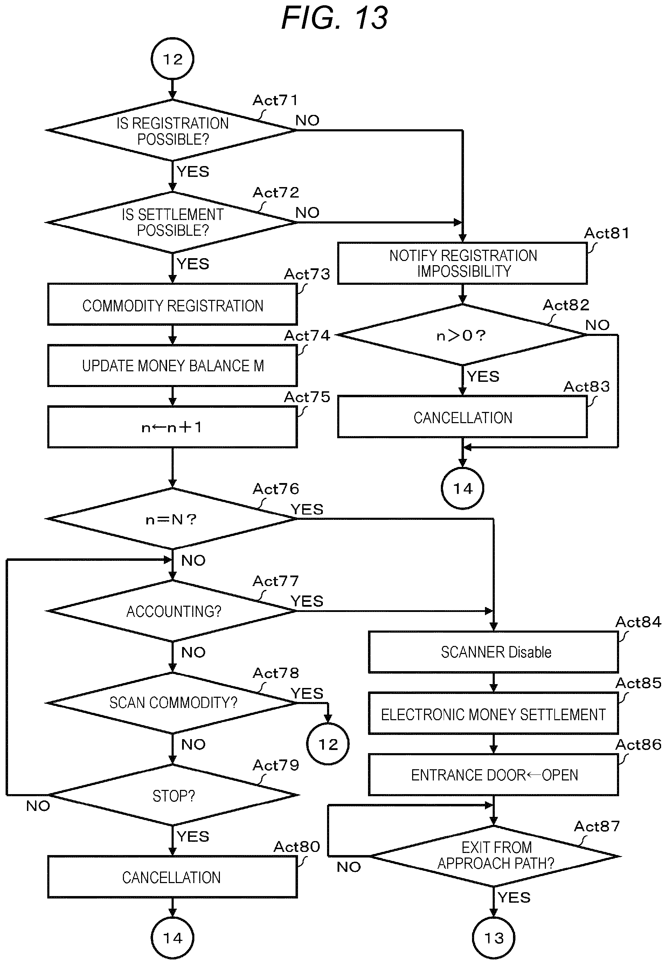

When the commodity scanning is performed in the standby states of Act66 and Act67, the processor 301 determines YES in Act66 and proceeds to Act71 in FIG. 13. The processor 301 specifies a commodity to which the code symbol is attached from the code symbol read by the scanner 305 as Act71. Next, the processor 301 confirms whether the commodity is a commodity which can be registered in the through type POS terminal 30A.

When the registration is possible, the processor 301 determines YES in Act71 and proceeds to Act72. The processor 301 confirms whether the settlement by the electronic money is possible as Act72. That is, the processor 301 confirms whether the balance M of the electronic money is equal to or greater than the price of the commodity scanned by Act66.

When the balance M of the electronic money is less than the price of the commodity, the processor 301 determines that the settlement by the electronic money is not possible. At this time, the processor 301 determines NO in Act72 and proceeds to Act81. On the other hand, even when the commodity cannot be registered, the processor 301 determines NO in Act71 and proceeds to Act81. In Act81, the processor 301 causes the touch panel 307 to display a message notifying that the registration of the commodity is not possible.

Thereafter, the processor 301 confirms whether the count value n is greater than "0" as Act82. When the count value n is greater than "0", that is, "1" or greater, the processor 301 determines YES in Act82 and proceeds to Act83. The processor 301 executes cancellation as Act83.

When the cancellation is completed, the processor 301 returns to Act68. On the other hand, when the count value n is "0", the processor 301 determines NO in Act82, skips Act83, and then returns to Act68. That is, the processor 301 outputs the disable signal to the scanner 305. The processor 301 controls the opening operation of the entrance door 312. The processor 301 continues to wait for the user to exit from the approach path. When the user exits from the approach path to the accounting place 14, the processor 301 returns to Act53.

On the other hand, when the registration is possible and the settlement is possible, the processor 301 determines YES in Act72 and proceeds to Act73. The processor 301 executes commodity registration as Act73. Next, when the commodity registration is completed, the processor 301 updates the balance M of the electronic money to an amount obtained by subtracting the price of the registered commodity as Act74.

The processor 301 counts up the count value n only by "1" as Act75. The processor 301 confirms whether the count value n reaches the regulated number of items N as Act76. When the count value n does not reach the regulated number of items N, the processor 301 determines NO in Act76 and proceeds to Act77. The processor 301 confirms whether the accounting button is operated as Act77. The accounting button is displayed on the screen 307A of the touch panel 307. When the accounting button is not operated, the processor 301 determines NO in Act77 and proceeds to Act78. The processor 301 confirms the presence or absence of the commodity scanning as Act78. When there is no commodity scanning, the processor 301 determines NO in Act78 and proceeds to Act79. The processor 301 confirms whether the stop button is operated as Act79. When the stop button is not operated, the processor 301 determines NO in Act79 and returns to Act77. Therefore, the processor 301 waits for the accounting button to be operated, waits for the commodity scanning to be performed, or waits for the stop button to be operated by Act77 to Act79.

When confirming that the commodity scanning is performed in the standby states of Act77 to Act79, the processor 301 determines YES in Act78 and returns to Act71. Thereafter, the processor 301 executes the processing after Act71 again.

When the stop button is operated in the standby states of Act77 to Act79, the processor 301 determines YES in Act79 and proceeds to Act80. The processor 301 executes the cancellation as Act80. When the cancellation is completed, the processor 301 returns to Act68. Thereafter, the processor 301 executes the processing after Act68 in the same manner as described above.

When the accounting button is operated in the standby states of Act77 to Act79, the processor 301 determines YES in Act77 and proceeds to Act84. On the other hand, even when the count value n reaches the regulated number of items N, the processor 301 determines YES in Act76 and proceeds to Act84. The processor 301 outputs a disable signal to the scanner 305 as Act84. The scanner 305 stops the function thereof by the disable signal. The processor 301 executes the electronic money settlement as Act85.

When the electronic money settlement is completed, the processor 301 controls the opening operation of the exit door 313 as Act86. By this control, the exit door 313 opens the exit path. The processor 301 continues to wait for the user to exit from the exit path as Act87. When the user exits from the exit path to the exit 16, the processor 301 determines YES in Act87 and returns to Act52. The processor 301 controls the opening operation of the entrance door 312 and the closing operation of the exit door 313 as Act52. Thereafter, the processor 301 executes the processing after Act53 in the same manner as described above.

Here, a computer of the through type POS terminal 30A including the processor 301 as a main constituent functions as a processing unit by executing Act85. The computer functions as a forcing unit by executing Act54, Act64, Act75, Act76, and Act84. Additionally, the computer functions as a control unit by executing Act52, Act63, Act69, and Act86.

The through type POS terminal 30A is operated as described above. Accordingly, a customer using the through type POS terminal 30A enters the passage 17 from the accounting place 14 and holds the recording medium of the electronic money over the antenna 306A. Then, the balance M of the electronic money is acquired in the through type POS terminal 30A.

Next, the customer holds the code symbol of the purchased commodity on the reading window 305A. At this time, when the purchased commodity is a commodity that can be registered, the price of the commodity and the electronic money balance M are compared with each other in the through type POS terminal 30A. Here, when the electronic money balance M is equal to or greater than the price of the commodity, the commodity registration is executed. Then, the electronic money balance M is reduced by the price of the commodity.

Here, when the regulated number of items N is "1", the settlement by the electronic money is forced. In this case, since the data of the electronic money are already read, the electronic money settlement is automatically executed.

On the other hand, when the regulated number of items N is "2", the registration of the second commodity becomes possible. Here, when the customer holds the code symbol of the second commodity on the reading window 305A, the price of the commodity is compared with the electronic money balance M in the same manner as the first commodity. The electronic money balance M at this time is an amount after the price of the first commodity is reduced therefrom. When the electronic money balance M is equal to or greater than the price of the commodity, the commodity registration is executed. Thereafter, the settlement by the electronic money is forced. Even in this case, since the data of the electronic money are already read, the electronic money settlement is automatically executed.

When the regulated number of items N is "2", a customer who purchases only one commodity confirms that the commodity is registered, after which the customer operates the accounting button. Then, in the through type POS terminal 30A, the electronic money settlement is executed.

As described above, when the electronic money settlement is executed, the exit door 313 is opened. Accordingly, the customer who completes the settlement can exit the store from the exit 16.

As described above, even in the second embodiment, in the same manner as that of the first embodiment, the customer who purchases the commodity within the regulated number of items N can complete the accounting of the purchased commodity almost without stopping on the passage 17 by using the through type POS terminal 30A. Accordingly, the same action and effect as those of the first embodiment can be obtained.

### Third Embodiment

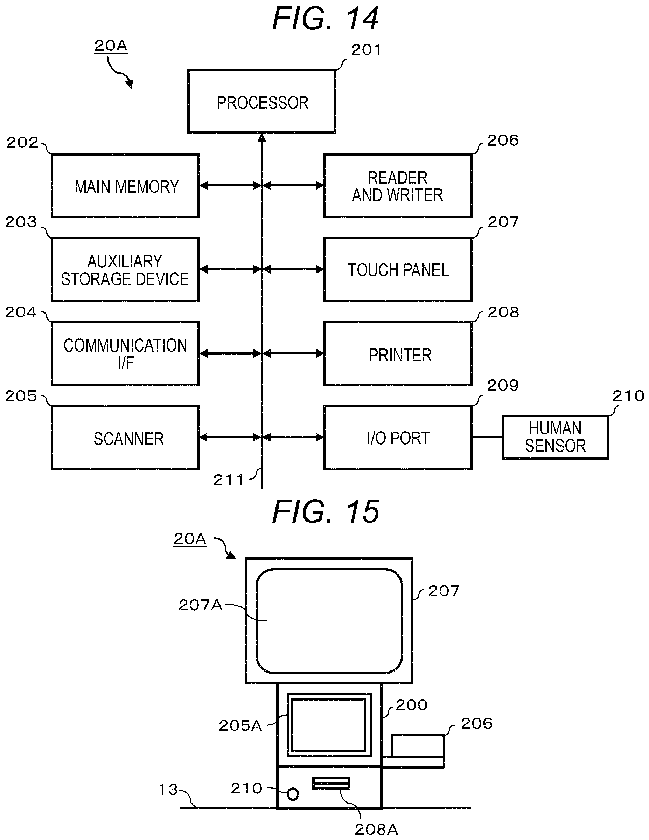

Next, a third embodiment will be described with reference to FIGS. 14 to 18.

The third embodiment realizes a function as an accounting apparatus capable of smoothly completing accounting by the self-accounting method without bagging in the face-to-face type POS terminal. Hereinafter, the face-to-face type POS terminal in the third embodiment will be denoted by a reference sign 20A.

FIG. 14 is a block diagram illustrating a main circuit configuration of the face-to-face type POS terminal 20A. The face-to-face type POS terminal 20A includes a processor 201, a main memory 202, an auxiliary storage device 203, a communication interface 204, a scanner 205, a reader and writer 206, a touch panel 207, a printer 208, an I/O port 209, a human sensor 210, and a system transmission line 211. The system transmission line 211 includes an address bus, a data bus, a control signal line, and the like. In the face-to-face type POS terminal 20A, the processor 201, the main memory 202, the auxiliary storage device 203, the communication interface 204, the scanner 205, the reader and writer 206, the touch panel 207, the printer 208, and the I/O port 209 are connected to the system transmission line 211. In the face-to-face type POS terminal 20A, a computer is formed by the processor 201, the main memory 202, and the auxiliary storage device 203, and the system transmission line 211 for connecting the processor 201, the main memory 202, and the auxiliary storage device 203.

The processor 201, the main memory 202, the auxiliary storage device 203, the communication interface 204, the scanner 205, the reader and writer 206, and the touch panel 207 have the same functions as those of the processor 301, the main memory 302, the auxiliary storage device 303, the communication interface 304, the scanner 305, the reader and writer 306, and the touch panel 307. Therefore, a detailed description thereof will be omitted herein.

The printer 208 prints receipt data on receipt paper and issues a receipt from a receipt issuing port. The I/O port 209 inputs a sensing signal from the human sensor 210. The human sensor 210 may be, for example, a thermal sensor using infrared rays or an optical sensor using reflection of light.

FIG. 15 is a schematic diagram illustrating an appearance configuration of the face-to-face type POS terminal 20A. As illustrated in FIG. 15, in the face-to-face type POS terminal 20A, a reading window 205A of the scanner 205, a receipt issuing port 208A of the printer 208, and the human sensor 210 are arranged on the front side of a housing 200. The touch panel 207 is mounted on an upper part of the housing. The touch panel 207 is mounted on the housing 200 so that a screen 207A faces the front. The reader and writer 206 is provided on one side of the housing 200. The face-to-face type POS terminal 20A having a configuration described above is installed, for example, in the vicinity of the entrance 15 on the accounting counter 13 with the front side thereof facing toward the customer side.

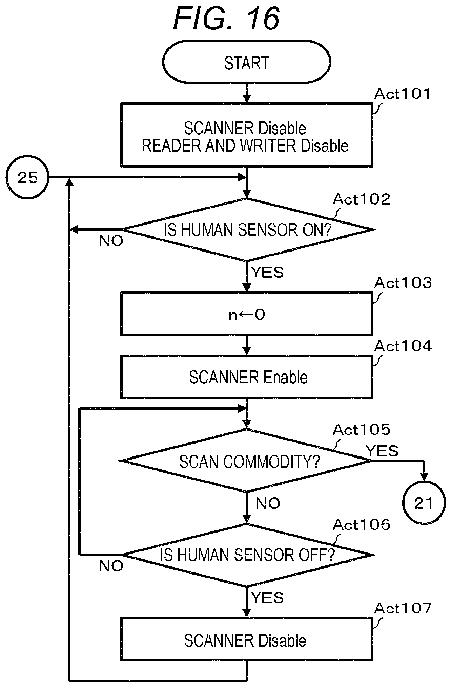

FIGS. 16 to 18 are flowcharts illustrating a procedure of main information processing executed by the processor 201 of the face-to-face type POS terminal 20A according to the main program. Hereinafter, an operation of the face-to-face type POS terminal 20A will be described by using the flowcharts. A detailed description will be omitted for the operation performed even in the first embodiment. An operation described below is one example . If the same result can be obtained, the procedures and contents of the operation are not particularly limited.

When a power source of the face-to-face type POS terminal 20A is supplied and the main program is activated, the processor 201 outputs a disable signal to the scanner 205 and the reader and writer 206, respectively as Act101. Both the scanner 205 and the reader and writer 206 stop the functions thereof by the disable signal.

The processor 201 confirms whether the human sensor 210 is turned on as Act102. When the human sensor 210 is not turned on, the processor 201 determines NO in Act102 and returns to Act102. Therefore, the processor 201 continues to wait for the human sensor 210 to be turned on.

When the human sensor 210 is turned on by a user standing on the front side of the housing 200, the processor 201 determines YES in Act102 and proceeds to Act103. The processor 201 resets the count value n of the counter area 31 to "0" as Act103.

The processor 201 outputs an enable signal to the scanner 205 as Act104. The scanner 205 validates the function thereof by the enable signal. Therefore, when the user standing on the front side of the housing 200 holds a code symbol attached to the commodity on the reading window 205A, the scanner 205 reads the code symbol.

The processor 201 confirms the presence or absence of the commodity scanning as Act105. When there is no commodity scanning, the processor 201 confirms whether the human sensor 210 is turned off as Act106. When the human sensor 210 is not turned off, the processor 201 determines YES in Act106 and returns to Act105. Therefore, the processor 201 waits for the commodity scanning to be performed or waits for the human sensor 210 to be turned off by Act105 and Act106.

When the user standing on the front side of the housing 200 moves away from the place, the human sensor 210 is turned off. When confirming that the human sensor 210 is turned off in the standby states of Act105 and Act106, the processor 201 determines YES in Act106 and proceeds to Act107. The processor 201 outputs a disable signal to the scanner 205 as Act107. The scanner 205 stops the function thereof by the disable signal.

The processor 201 which outputs the disable signal to the scanner 205 returns to Act102. That is, the processor 201 continues to wait for the human sensor 210 to be turned on again.

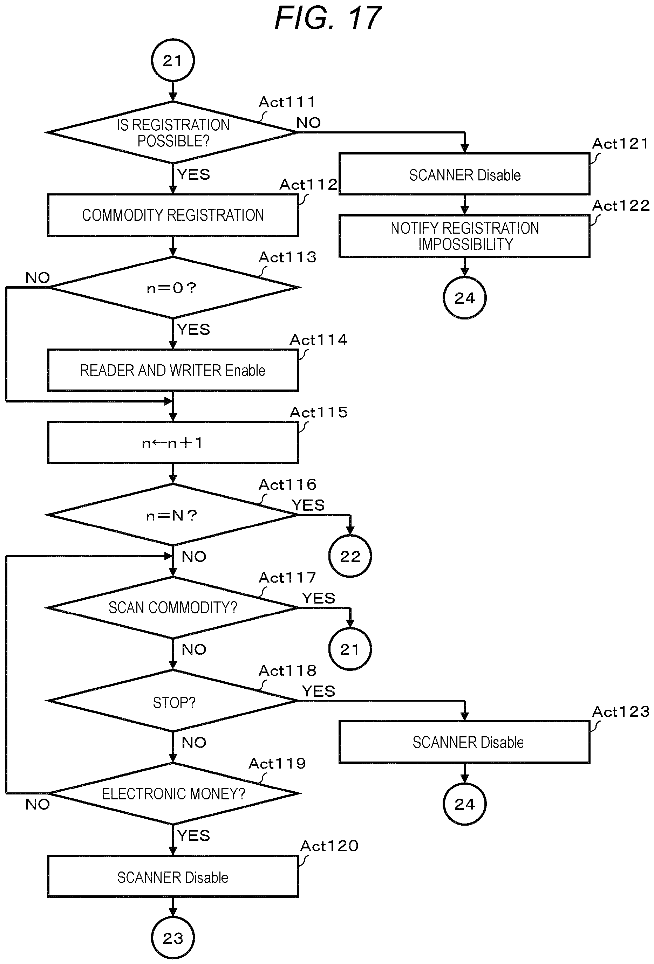

When there is the commodity scanning in the standby states of Act105 and Act106, the processor 201 determines YES in Act105 and proceeds to Act111 in FIG. 17. The processor 201 confirms whether the commodity whose code symbol is read by the scanner 205 as Act111 is a commodity which can be registered in the face-to-face type POS terminal 20A. Even in the face-to-face type POS terminal 20A, in the same manner as that of the through type POS terminal 30 or 30A, a list of commodities whose accounting cannot be performed by the face-to-face type POS terminal 20A is stored in the auxiliary storage device 303.

When the registration is not possible, the processor 201 determines NO in Act111 and proceeds to Act121. The processor 201 outputs a disable signal to the scanner 205 as Act121. The processor 201 also causes the touch panel 307 to display a message notifying that the registration of the commodity is not possible as Act122. Thereafter, the processor 201 proceeds to Act136 in FIG. 8. The processor 201 causes the touch panel 307 to display a message notifying that the settlement thereof is not possible as Act136. Then, the processor 201 proceeds to Act133. The processing after Act133 will be described later.

On the other hand, when the registration is possible, the processor 201 determines YES in Act111 and proceeds to Act112. The processor 201 executes the commodity registration as Act112. When the commodity registration is completed, the processor 201 checks the count value n as Act113. When the count value n is "0", the processor 201 determines YES in Act113 and proceeds to Act114. The processor 201 outputs an enable signal to the reader and writer 206 as Act114. The reader and writer 206 validates the function thereof by the enable signal. Accordingly, when the user standing on the front side of the housing 200 holds the recording medium related to the electronic money to the reader and writer 206, the data of the electronic money recorded in the recording medium, that is, the first user ID, are read by the reader and writer 206 in the non-contact manner.

When Act114 is completed, the processor 201 proceeds to Act115. On the other hand, when the count value n is "1" or greater in Act113, the processor 201 determines NO in Act113, skips Act114, and then proceeds to Act115.

The processor 201 counts up the count value n only by "1" as Act115. The processor 201 confirms whether the count value n reaches the regulated number of items N as Act116. When the count value n does not reach the regulated number of items N, the processor 201 determines NO in Act116 and proceeds to Act117. The processor 201 confirms the presence or absence of the commodity scanning as Act117. When there is no commodity scanning, the processor 201 determines NO in Act117 and proceeds to Act118. The processor 201 confirms whether the stop button is operated as Act118. The stop button is displayed on the screen 207A of the touch panel 207. When the stop button is not operated, the processor 201 determines NO in Act118 and proceeds to Act119. The processor 201 confirms whether the data of the electronic money are read by the reader and writer 206 as Act119. When the data of the electronic money are not read, the processor 201 determines NO in Act119 and returns to Act117. Therefore, the processor 201 waits for the commodity scanning to be performed, waits for the stop button to be operated, or waits for the data of the electronic money to be read by Act117 to Act119.

When confirming that the commodity scanning is performed in the standby states of Act117 to Act119, the processor 201 determines YES in Act117 and returns to Act111. Thereafter, the processor 201 executes the processing after Act111 again.

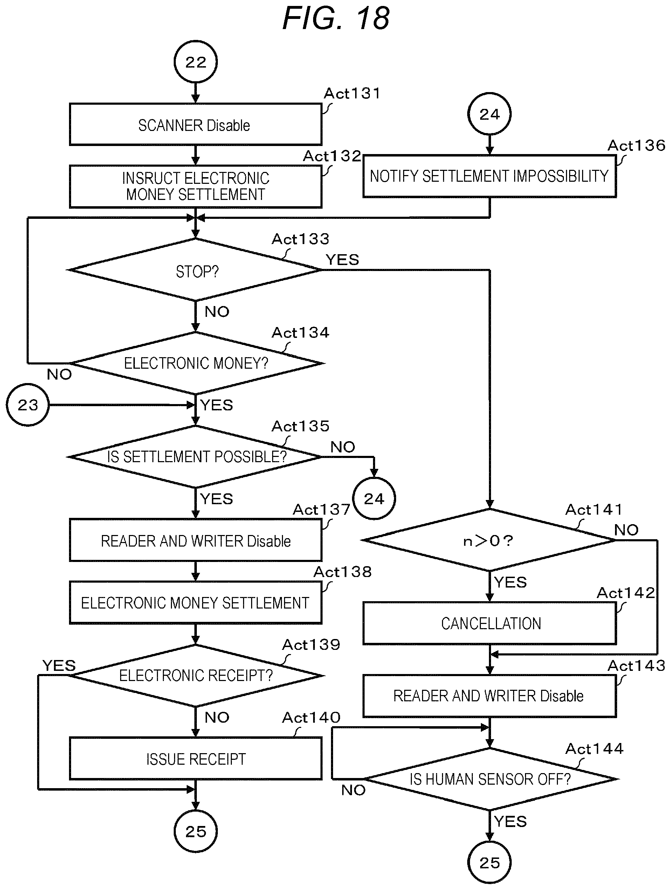

When the stop button is operated in the standby states of Act117 to Act119, the processor 201 determines YES in Act118 and proceeds to Act123. The processor 201 outputs a disable signal to the scanner 205 as Act123. The scanner 205 stops the function thereof by the disable signal. Thereafter, the processor 201 proceeds to Act136 in FIG. 18. The processor 201 causes the touch panel 307 to display a message notifying that the settlement is not possible as Act136. Then, the processor 201 proceeds to Act133. The processing after Act133 will be described later.

When the data of the electronic money are read by the reader and writer 206 in the standby states of Act117 to Act119, the processor 201 determines YES in Act119 and proceeds to Act120. The processor 201 outputs a disable signal to the scanner 205 as Act120. The scanner 205 stops the function thereof by the disable signal. Thereafter, the processor 201 proceeds to Act135 in FIG. 8. The processing after Act135 will be described later.

When the count value n reaches the regulated number of items N, the processor 201 determines YES in Act116 and proceeds to Act131 in FIG. 18. The processor 201 outputs a disable signal to the scanner 205 as Act131. The scanner 205 stops the function thereof by the disable signal. The processor 201 causes the touch panel 307 to display a message instructing that the settlement by the electronic money should be performed as Act132. Thereafter, the processor 201 proceeds to Act133. That is, after the processor 210 causes the touch panel 307 to display the message instructing that the settlement by the electronic money should be performed in Act132, or the processor 210 causes the touch panel 307 to display the message notifying that the settlement is not possible in Act136, the processor 201 proceeds to Act133.

The processor 201 confirms whether the stop button is operated as Act133. When the stop button is not operated, the processor 201 determines NO in Act133 and proceeds to Act134. The processor 201 confirms whether the data of the electronic money are read by the reader and writer 206 as Act134. When the data of the electronic money are not read, the processor 201 determines NO in Act134 and returns to Act133. Therefore, the processor 201 waits for the stop button to be operated or waits for the data of the electronic money to be read by Act133 and Act134.

When the stop button is operated in the standby states of Act133 and Act134, the processor 201 determines YES in Act133 and proceeds to Act141. The processor 201 confirms whether the count value n is greater than "0" as Act141. When the count value n is greater than "0", that is, "1" or greater, the processor 201 determines YES in Act141 and proceeds to Act142. The processor 201 executes cancellation as Act142.

When the cancellation is completed, the processor 201 proceeds to Act143. On the other hand, when the count value n is "0", the processor 201 determines NO in Act141, skips Act142, and then proceeds to Act143. The processor 201 outputs a disable signal to the reader and writer 206 as Act143. The processor 201 confirms whether the human sensor 210 is turned off as Act144. When the human sensor 210 is not turned off, the processor 201 determines NO in Act144 and returns to Act144. Therefore, the processor 201 continues to wait for the human sensor 210 to be turned off.

When the human sensor 210 is turned off, the processor 201 determines YES in Act144 and returns to Act102. That is, the processor 201 continues to wait for the human sensor 210 to be turned on again.

When the data of the electronic money are read by the reader and writer 206 in the standby states of Act133 and Act134, the processor 201 determines YES in Act134 and proceeds to Act135. As described above, when the data of the electronic money are read by the reader and writer 206 after the count value n reaches the regulated number of items N, or when the data of the electronic money are read by the reader and writer 206 before the count value n reaches the regulated number of items N, the processor 201 proceeds to Act135.

The processor 201 confirms whether the settlement by the electronic money is possible as Act135. When the electronic money settlement is not possible, the processor 201 determines NO in Act135 and proceeds to Act136. The processor 201 causes the touch panel 307 to display the message notifying that the settlement is not possible as Act136. Thereafter, the processor 201 returns to Act133. That is, the processor 201 returns to the standby states of Act133 and Act134.

When the electronic money balance is equal to or greater than the settlement amount and the electronic money settlement is possible, the processor 201 determines YES in Act135 and proceeds to Act137. The processor 201 outputs a disable signal to the reader and writer 206 as Act137. The reader and writer 206 stops the function thereof by the disable signal.

The processor 201 executes the electronic money settlement as Act138. When the electronic money settlement is completed, the processor 201 confirms whether the user of the electronic money is a user of the electronic receipt. When the first user ID of the electronic money read from the recording medium related to the electronic money cooperates with the second user ID in the linkage server 90, the processor 201 recognizes that the user of the electronic money is the user of the electronic receipt. When the first user ID of the electronic money does not cooperate with the second user ID, the processor 201 recognizes that the user of the electronic money is not the user of the electronic receipt. Whether the linkage therebetween is designed can be confirmed by inquiry to the linkage server 90.

When the user of the electronic money is not the user of the electronic receipt, the processor 201 determines NO in Act139 and proceeds to Act140. The processor 201 outputs receipt data to the printer 208 as Act140. Accordingly, the printer 208 issues a receipt on which the receipt data are printed from the receipt issuing port 208A. Thereafter, the processor 201 returns to Act102.

On the other hand, when the user of the electronic money is the user of the electronic receipt, the processor 201 determines YES in Act139, skips Act140, and then returns to Act102. In this case, the receipt data are electronized and transmitted to the electronic receipt server 80. Accordingly, the user can browse the receipt as the electronic receipt from a smart phone, a tablet terminal, and the like.

Here, a computer of the face-to-face type POS terminal 20A including the processor 201 as a main constituent functions as a processing unit by executing Act138. The computer functions as a forcing unit by executing Act103, Act113 to Act116, Act131, and Act132.

The face-to-face type POS terminal 20A is operated as described above. Accordingly, when a customer who performs the settlement by the electronic money purchases only a small number of items, the customer can perform the accounting of the purchased commodity by himself or herself by using the face-to-face type POS terminal 20A. Specifically, in a case where the regulated number of items N is "1", when the customer purchases only one commodity, the customer can perform the accounting by using the face-to-face type POS terminal 20A. In a case where the regulated number of items N is "2", when purchasing the commodities up to two items, the customer can perform the accounting by using the face-to-face type POS terminal 20A.

The customer using the face-to-face type POS terminal 20A stands on the front side of the housing 200 of the face-to-face type POS terminal 20A and holds the code symbol of the purchased commodity on the reading window 205A. At this time, when the purchased commodity is a commodity that can be purchased, commodity registration is executed in the face-to-face type POS terminal 20A.

Here, when the regulated number of items N is "1", a message instructing that the settlement by the electronic money should be performed is displayed on the touch panel 207. The function of the scanner 205 is stopped. As a result, in the face-to-face type POS terminal 20A, the settlement by the electronic money is forced. At this time, the customer having the second purchased commodity operates the stop button. Then, since a message notifying that the settlement is not possible is displayed, the customer operates the stop button again and moves away from the front side of the case 200.

On the other hand, when the regulated number of items N is "2", the message instructing that the settlement by electronic money should be performed is not displayed thereon. The function of the scanner 205 is not also stopped. Therefore, the customer can hold the code symbol of the second purchase commodity on the reading window 205A. At this time, when the second purchased commodity is also the commodity that can be purchased, the commodity registration is executed in the face-to-face type POS terminal 20A. Then, the message instructing that the settlement by the electronic money should be performed is displayed on the touch panel 207. The function of the scanner 205 is stopped. As a result, in the face-to-face type POS terminal 20A, the settlement by the electronic money is forced.

The customer who completes the registration of the purchased commodity holds the recording medium of the electronic money over the antenna 206A. Then, the reader and writer 206 reads the data of the electronic money from the recording medium. Meanwhile, when the electronic money balance is equal to or greater than the settlement amount of the purchased commodity, the settlement by the electronic money is executed in the face-to-face type POS terminal 20A. In the case of the user of the electronic receipt, the electronic receipt data are transmitted to the electronic receipt server 80. On the other hand, when the user is not the user of the electronic receipt, the receipt printed by the printer 208 is issued from the receipt issuing port 208A. Accordingly, when the receipt is issued from the receipt issuing port 208A, the customer who completes the settlement takes the receipt and then exits the store through the entrance 15.

As descried above, the customer who purchases the commodity within the regulated number of items N first holds the code symbol of the purchased commodity on the reading window 205A, and then holds the recording medium of the electronic money on the antenna 206A. By performing the above-described operation, the customer can complete the accounting of the purchased commodity by using the face-to-face type POS terminal 20A. At this time, the customer does not bag the commodity. As a result, processing time required for the accounting can be dramatically shortened. Since many customers who purchase commodity within the regulated number of items N are encouraged to use the face-to-face type POS terminal 20A, the congestion of accounting work can be reduced.

### Modified Example

Hereinafter, a modified example of each embodiment will be described.

In the first to third embodiments, when the count value n reaches the regulated number of items N, the processor 201 or the processor 301 outputs the disable signal to the scanner 205 or the scanner 305, thereby stopping the function of the scanner 205 or the scanner 305. In this point, it is not necessarily required to stop the function of the scanner 205 or the scanner 305. In short, when the count value n reaches the regulated number of items N, it is desirable to invalidate the subsequent commodity registration. For example, a commodity ID read by the scanner 205 or the scanner 305 may be read and discarded, thereby making the commodity registration impossible. Here, the computer of the face-to-face type POS terminal 20A or the through type POS terminal 30A including the processor 201 or the processor 301 as a main constituent functions as an invalidation unit.

In the first to third embodiments, the scanner 205 or 305 is exemplified as the reading unit, but the reading unit is not limited to the scanner 205 or 305. For example, in a store where each commodity to which an RFID tag storing information such as a commodity ID, and the like is attached is sold, a reader and writer of the RFID tag functions as the reading unit.

In the first to third embodiments, the reader and writer 206 or 306 of the electronic money recording medium is exemplified as the receiving unit, but the receiving unit is not limited to the reader and writer 206 or 306. For example, when a credit system is introduced as the settlement method, a reader of the credit card can be used as the receiving unit. When cash settlement is introduced, an automatic change machine can be used as the receiving unit. When introducing two-dimensional code settlement using a QR code (Registered trademark), a two-dimensional code reader can be used as the receiving unit. In the case of the two-dimensional code settlement, since the two-dimensional code settlement becomes post-pay, that is, post-pay settlement using a credit card, and the like, a credit post-pay server is provided as a new constituent instead of the electronic money server 70.

In the first and second embodiments, the control unit opens the exit door 313 when the settlement starts, but the timing of opening the exit door 313 is not limited thereto. The exit door 313 may be opened by confirming that the electronic money settlement is completed.

In the first and second embodiments, the entrance door 312 is exemplified as the first blocking unit, and the exit door 313 is exemplified as the second blocking unit or the blocking unit, but any of the blocking units is not limited to those of a door structure. In short, it may be only required to prevent a user from entering or exiting.

In the first and second embodiments, the entrance door 312 may not be provided as the first blocking unit. In this case, the exit door 313 serves as the blocking unit. The exit door 313 is also not necessarily indispensable.

The first and second embodiments are limited to the user of the electronic receipt, but a printer may be also mounted on the through type POS terminal 30 or 30A, thereby issuing the receipt. In this case, it is desirable that the receipt issuing port is formed closer to the side of the exit 16 than the touch panel 307.

A store that introduces this accounting apparatus is not limited to a convenience store. For example, the accounting apparatus can be introduced to a store, and the like that are located in facilities such as public facilities, corporate buildings, and the like. In this case, the through type POS terminal 30 or 30A of the first or second embodiment and the face-to-face type POS terminal 20A of the third embodiment may be used together in one store.

The transfer of the accounting apparatus is generally performed in a state where a program is stored in a ROM. However, the embodiments herein are not limited thereto, and the transfer thereof may be performed in a state where the program is not stored in the ROM. In this case, a program separately transferred from the accounting apparatus may be written in a writable storage device provided in the accounting apparatus according to an operation of a user, and the like. The transfer of the program can be performed by recording the program on a removable recording medium or by communication via a network. The recording medium such as a CD-ROM, a memory card, and the like can store the program, and the form thereof is not limited as long as the recording medium can be read by an apparatus.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions as defined by the appended claims.

## Claims

1. An accounting apparatus, comprising:
a reading unit configured to read information of a purchased commodity;
a receiving unit configured to receive payment of a price;
a processing unit configured to execute settlement based upon the information of the purchased commodity read by the reading unit and information of the payment of the price received by the receiving unit; and
a forcing unit configured to force the settlement when a number of the purchased commodities, of which information is read by the reading unit, reaches a regulated number of purchased commodities.

2. The apparatus according to claim 1, further comprising:
a blocking unit configured to block a purchaser who purchases the purchased commodity from passing through a passage through which the purchaser passes; and
a control unit configured to cause the blocking unit to function until the settlement is started, and to cancel the function of the blocking unit when the settlement starts or the settlement is completed, wherein
the reading unit and the receiving unit are arranged along the passage.

3. The apparatus according to claim 1 or 2, further comprising:
a first blocking unit configured to block a purchaser who purchases the purchased commodity from entering a passage through which the purchaser passes;
a second blocking unit configured to block the purchaser from exiting from the passage; and
a control unit configured to cancel a function of the first blocking unit when the settlement is completed or when the settlement becomes impossible after causing the first blocking unit to function when the reading unit reads the information of the purchased commodity or the receiving unit receives the payment, and to cancel a function of the second blocking unit when the settlement starts or when the settlement is completed after causing the second blocking unit to function until the settlement starts, wherein
the reading unit and the receiving unit are arranged along the passage.

4. The apparatus according to any of claims 1 to 3, wherein
the reading unit is provided on an entrance side of the passage;
the receiving unit is provided on an exit side of the passage; and
the forcing unit puts the reading unit into an operating state until a number of the purchased commodities whose information is read by the reading unit reaches a regulated number of purchased commodities, and forces the settlement by putting the reading unit into a non-operating state when the number of the purchased commodities reaches the regulated number of purchased commodities.

5. The apparatus according to any of claims 1 to 3, wherein
the reading unit is provided on an exit side of the passage;
the receiving unit is provided on an entrance side of the passage; and
the forcing unit forces the settlement by putting the reading unit into a non-operating state when a number of the purchased commodities whose information is read by the reading unit reaches a regulated number of purchased commodities, after receiving information of the payment of the price received by the receiving unit.

6. The apparatus according to any of claims 1 to 5, further comprising:
a setting unit configured to set the regulated number of purchased commodities.

7. An accounting apparatus, comprising:
a reading unit configured to read information of a purchased commodity;
a receiving unit configured to receive payment of a price;
a processing unit configured to execute settlement based upon the information of the purchased commodity read by the reading unit and information of the payment of the price received by the receiving unit; and
an invalidation unit configured to invalidate an operation of the reading unit when a number of the purchased commodities read by the reading unit reaches a regulated number of purchased commodities for limiting the number of the purchased commodities read by the reading unit.

8. The apparatus according to claim 7, further comprising:
a setting unit configured to set the regulated number of purchased commodities.

9. The apparatus according to claim 7 or 8, further comprising:
a blocking unit configured to block a purchaser who purchases the purchased commodity from passing through a passage through which the purchaser passes; and
a control unit configured to cause the blocking unit to function until the settlement is started, and to cancel the function of the blocking unit when the settlement starts or the settlement is completed, wherein
the reading unit and the receiving unit are arranged along the passage.

10. The apparatus according to any of claims 7 to 9, further comprising:
a first blocking unit configured to block a purchaser who purchases the purchased commodity from entering a passage through which the purchaser passes;
a second blocking unit configured to block the purchaser from exiting from the passage; and
a control unit configured to cancel a function of the first blocking unit when the settlement is completed or when the settlement becomes impossible after causing the first blocking unit to function when the reading unit reads the information of the purchased commodity or the receiving unit receives the payment, and to cancel a function of the second blocking unit when the settlement starts or when the settlement is completed after causing the second blocking unit to function until the settlement starts, wherein
the reading unit and the receiving unit are arranged along the passage.

11. The apparatus according to any of claims 7 to 10, wherein
the reading unit is provided on an entrance side of the passage;
the receiving unit is provided on an exit side of the passage; and
a forcing unit puts the reading unit into an operating state until a number of the purchased commodities whose information is read by the reading unit reaches a regulated number of purchased commodities, and forces the settlement by putting the reading unit into a non-operating state when the number of the purchased commodities reaches the regulated number of purchased commodities.

12. The apparatus according to any of claims 7 to 10, wherein
the reading unit is provided on an exit side of the passage;
the receiving unit is provided on an entrance side of the passage; and
a forcing unit forces the settlement by putting the reading unit into a non-operating state when a number of the purchased commodities whose information is read by the reading unit reaches a regulated number of purchased commodities, after receiving information of the payment of the price received by the receiving unit.

13. A method for causing a computer of an accounting apparatus, including a reading unit that reads information of a purchased commodity and a receiving unit that receives a payment of a price, to perform functions of:
executing settlement based upon information of the purchased commodity read by the reading unit and information of the payment of the price received by the receiving unit; and
forcing settlement when a number of the purchased commodities whose information is read by the reading unit reaches a regulated number of purchased commodities.

14. The method according to claim 13, further comprising:
blocking a purchaser who purchases the purchased commodity from passing through a passage through which the purchaser passes; and
causing the blocking until the settlement is started, and canceling the blocking when the settlement starts or the settlement is completed.

15. The method according to claim 13 or 14, further comprising:
first blocking a purchaser who purchases the purchased commodity from entering a passage through which the purchaser passes;
second blocking the purchaser from exiting from the passage; and
canceling the first blocking when the settlement is completed or when the settlement becomes impossible after causing the first blocking to function when reading the information of the purchased commodity or receiving the payment, and canceling the second blocking when the settlement starts or when the settlement is completed after the second blocking functions until the settlement starts.
